# EUROPEAN PATENT APPLICATION

(11) **EP 4 681 914 A1**
(43) Date of publication of application: **21.01.2026**
(21) Application number: 25173312.7
(22) Date of filing: 29.04.2025
(51) Int. Cl.: B32B 7/02, B32B 5/02, B32B 5/26, B32B 27/08, B32B 27/12

(54) **MODIFIED MODULUS COMPOSITE LAMINATE SYSTEM AND METHOD OF USING THE SAME**

(30) Priority: 17.07.2024 US 202418776198
(71) Applicant: The Boeing Company, Arlington, VA 22202 (US)
(72) Inventor: LAM, Benjamin Z., Arlington, 22202 (US); GROSS, Gwen M., Arlington, 22202 (US); BOLLES, Jason A., Arlington, 22202 (US); ACKERMAN, Patrice K., Arlington, 22202 (US); MILLER, Melinda D., Arlington, 22202 (US)
(74) Representative: Boult Wade Tennant LLP

(57) **Abstract**

There is provided a modified modulus composite laminate system (10) including a composite laminate assembly (16) having structural ply layers (22) preimpregnated with a structural resin (60). The system (10) includes a surface layer (12) applied to the composite laminate assembly (16), and having a modified modulus (25c) less than, or equal to, a ply modulus (25a), a surface layer coefficient of thermal expansion (26b) different from a ply coefficient of thermal expansion (26a), and a surface layer coefficient of moisture expansion (28b) different from a ply coefficient of moisture expansion (28a). The system (10) has at least one secondary coating (70) applied to the surface layer (12). The modified modulus (25c) of the surface layer (12) is modified to be greater than, or equal to, a secondary coating modulus (25d). The surface layer (12) creates a stress relief (31) and an integrated dampening (102) between the secondary coating (70) and the structural ply layers (22), to provide an increased microcracking resistance (106) and a minimized structural degradation (108) of the modified modulus composite laminate system (10).

## Description

### FIELD

The present disclosure relates generally to composite structure systems and methods, and in particular, to co-cured composite laminate structure systems and methods for aircraft composite structures.

### BACKGROUND

Composite structures, such as carbon-fiber reinforced polymer (or plastic) (CFRP) structures, or glass-fiber reinforced polymer (or plastic) (GRFP) structures, may be used in a wide variety of applications, including in the manufacture of aircraft, spacecraft, rotorcraft, watercraft, automobiles, trucks, and other vehicles and structures, due to their high strength-to-weight ratios, corrosion resistance, and other favorable properties. The composite structures, such as CFRP or GFRP structures, are typically made of a composite material comprising a matrix material, such as a resin, reinforced with fiber material, such as carbon fiber, glass fiber, aramid fiber, or fiberglass, or other suitable fiber material. Aircraft composite structures may include aircraft skin panels on wings, vertical and horizontal stabilizers, fuselage, and other aircraft composite structures.

Known composite structure material systems and methods include composite laminate structures composed of a stackup of structural ply layers, each structural ply layer made of a similar material having a similar coefficient of thermal expansion (CTE), a similar coefficient of moisture expansion (CME), and a similar modulus. During manufacture, the composite laminate structure is cured at elevated temperatures, which lock in thermally induced strains during cure. After cure, a secondary coating, such as a paint or a primer, is typically applied at room temperature or ambient temperature, to a surface of the composite laminate structure. The secondary coating has a different strain, CTE, CME, and modulus than the composite laminate structure, which creates a strain mismatch between the secondary coating and the underlying composite laminate structure. In an operational environment, during repeated cyclic thermal moisture exposure of the composite laminate structure with the secondary coating, because of the differences in strains, CTEs, CMEs, and moduli, between the secondary coating and the underlying composite laminate structure, the thermal moisture cycling may cause strains and stresses and may result in undesirable cracking or microcracking in the secondary coating, leading to propagation of internal cracking or microcracking into the underlying composite laminate structure. This may, in turn, result in increased costs to repair or rework and may compromise the composite laminate structure.

In addition, known composite structure material systems and methods include modification of a composite laminate structure surface, either mechanically, chemically, or energetically, to increase adhesion of the secondary coating, such as the paint or the primer, to the composite laminate structure surface. However, such known systems and methods focus on the flexibility, e.g., elongation, of the secondary coating only. Moreover, such known systems and methods do not address modulus modification of the composite laminate structure relative to the secondary coating, or coatings, applied to the composite laminate structure, in that the secondary coating, or coatings, applied to the composite laminate structure are exposed to unwanted amounts of strain and stress, which may lead to internal cracking or microcracking of the composite laminate structure.

Moreover, a known system and method of modifying a coefficient of thermal expansion between two materials exists. Such known system and method includes using a strain isolation pad between two materials. However, the use of such strain isolation pad is with ceramic materials and metal materials, and not thermoset composite materials and secondary coatings, such as paints.

Accordingly, there is a need in the art for an improved modified modulus composite laminate system and method that modifies the modulus of a surface layer on a composite laminate structure to more closely match a modulus of a secondary coating, to avoid strain mismatch, to minimize or prevent surface microcracking or cracking in the secondary coating to avoid repair or rework, to minimize or prevent internal microcracking or cracking in the underlying composite laminate structure to avoid repair or rework, to minimize structural degradation due to microcracking or cracking, to improve thermal moisture cycling performance in-service, and to provide advantages over known composite structure material systems and methods.

### SUMMARY

Examples provide for an improved modified modulus composite laminate system and method. As discussed in the below detailed description, versions of the improved modified modulus composite laminate system and method may provide significant advantages over known systems and methods.

In one exemplary version, there is provided a modified modulus composite laminate system. The modified modulus composite laminate system comprises a composite laminate assembly that is cured and comprised of a plurality of structural ply layers preimpregnated with a structural resin. Each structural ply layer has a ply modulus, a ply coefficient of thermal expansion, and a ply coefficient of moisture expansion that are the same in each structural ply layer.

The modified modulus composite laminate system further comprises a surface layer applied directly to the composite laminate assembly, either applied prior to curing the composite laminate assembly, or applied after the curing of the composite laminate assembly. The surface layer applied prior to the curing, or applied after the curing, has, a modified modulus that is less than, or equal to, the ply modulus, a surface layer coefficient of thermal expansion that is different from the ply coefficient of thermal expansion, and a surface layer coefficient of moisture expansion that is different from the ply coefficient of moisture expansion.

The modified modulus composite laminate system further comprises at least one secondary coating applied directly to the surface layer, after the curing of the composite laminate assembly. The at least one secondary coating has, a secondary coating modulus that is different from the ply modulus, a secondary coating coefficient of thermal expansion that is different from the ply coefficient of thermal expansion, and a secondary coating coefficient of moisture expansion that is different from the ply coefficient of moisture expansion.

The modified modulus of the surface layer is modified to be greater than, or equal to, the secondary coating modulus of the at least one secondary coating, prior to application of the at least one secondary coating to the surface layer. The surface layer with the modified modulus creates a stress relief and an integrated dampening between the at least one secondary coating and the plurality of structural ply layers of the composite laminate assembly, to provide an increased microcracking resistance and a minimized structural degradation for the modified modulus composite laminate system, when the modified modulus composite laminate system is subjected to one or more of, a thermal exposure, and a moisture exposure, in a thermal moisture cycling.

In another exemplary version, there is provided an aircraft having one or more aircraft composite structures with a modified modulus composite laminate system. The aircraft comprises the one or more aircraft composite structures comprising one or more of, a fuselage, one or more wings, and a tail comprising one or more vertical stabilizers, and horizontal stabilizers.

The modified modulus composite laminate system incorporated in the one or more of the aircraft composite structures comprises a composite laminate assembly that is cured and comprised of a plurality of structural ply layers preimpregnated with a structural resin. Each structural ply layer has, a ply modulus, a ply coefficient of thermal expansion, and a ply coefficient of moisture expansion that are the same in each structural ply layer.

The modified modulus composite laminate system further comprises a surface layer applied directly to the composite laminate assembly, either applied prior to curing the composite laminate assembly, or applied after the curing of the composite laminate assembly. The surface layer applied prior to the curing, or applied after the curing, has, a modified modulus that is less than, or equal to, the ply modulus, a surface layer coefficient of thermal expansion that is different from the ply coefficient of thermal expansion, and a surface layer coefficient of moisture expansion that is different from the ply coefficient of moisture expansion.

The modified modulus composite laminate system further comprises at least one secondary coating applied directly to the surface layer, after the curing of the composite laminate assembly. The at least one secondary coating has, a secondary coating modulus that is different from the ply modulus, a secondary coating coefficient of thermal expansion that is different from the ply coefficient of thermal expansion, and a secondary coating coefficient of moisture expansion that is different from the ply coefficient of moisture expansion.

The modified modulus of the surface layer is modified to be greater than, or equal to, the secondary coating modulus of the at least one secondary coating, prior to application of the at least one secondary coating to the surface layer. The surface layer with the modified modulus creates a stress relief and an integrated dampening between the at least one secondary coating and the plurality of structural ply layers of the composite laminate assembly, to provide an increased microcracking resistance and a minimized structural degradation for the one or more aircraft composite structures with the modified modulus composite laminate system, when the one or more aircraft composite structures with the modified modulus composite laminate system are subjected to one or more of, a thermal exposure, and a moisture exposure, in a thermal moisture cycling.

In another exemplary version, there is provided a method of using a modified modulus composite laminate system, to provide an increased microcracking resistance and a minimized structural degradation for a composite structure. The method comprises the step of providing the modified modulus composite laminate system.

The modified modulus composite laminate system comprises a composite laminate assembly that is cured and comprised of a plurality of structural ply layers preimpregnated with a structural resin. Each structural ply layer has a ply modulus, a ply coefficient of thermal expansion, and a ply coefficient of moisture expansion that are the same in each structural ply layer.

The modified modulus composite laminate system further comprises a surface layer applied directly to the composite laminate assembly, either applied prior to curing the composite laminate assembly, or applied after the curing the composite laminate assembly. The surface layer applied prior to the curing, or applied after the curing, has, a modified modulus that is less than, or equal to, the ply modulus, a surface layer coefficient of thermal expansion that is different from the ply coefficient of thermal expansion, and a surface layer coefficient of moisture expansion that is different from the ply coefficient of moisture expansion.

The modified modulus composite laminate system further comprises at least one secondary coating applied directly to the surface layer, after the curing of the composite laminate assembly. The at least one secondary coating has, a secondary coating modulus that is different from the ply modulus, a secondary coating coefficient of thermal expansion that is different from the ply coefficient of thermal expansion, and a secondary coating coefficient of moisture expansion that is different from the ply coefficient of moisture expansion. The modified modulus of the surface layer is modified to be greater than, or equal to, the secondary coating modulus of the at least one secondary coating, prior to application of the at least one secondary coating to the surface layer.

The method further comprises the step of incorporating the modified modulus composite laminate system in the composite structure. The method further comprises the step of using the modified modulus composite laminate system having the surface layer with the modified modulus, to create a stress relief and an integrated dampening between the at least one secondary coating and the plurality of structural ply layers of the composite laminate assembly, to provide the increased microcracking resistance and the minimized structural degradation for the composite structure with the modified modulus composite laminate system, when the composite structure with the modified modulus composite laminate system is subjected to one or more of, a thermal exposure, and a moisture exposure, in a thermal moisture cycling.

The features, functions, and advantages that have been discussed can be achieved independently in various versions of the disclosure or may be combined in yet other versions, further details of which can be seen with reference to the following description and drawings.

### BRIEF DESCRIPTION OF THE DRAWINGS

The disclosure can be better understood with reference to the following detailed description taken in conjunction with the accompanying drawings, which illustrate preferred and exemplary versions, but which are not necessarily drawn to scale. The drawings are examples and not meant as limitations on the description or claims.
FIG. 1A is an illustration of a block diagram of an exemplary modified modulus composite laminate system;
FIG. 1B is an illustration of a block diagram of an exemplary snap cure process and cured composite structure for the modified modulus composite laminate system;
FIG. 2A is an illustration of a front cross-sectional view of an exemplary modified modulus composite laminate assembly, where a surface layer in the form of a surfacing film is applied to an uncured composite laminate assembly;
FIG. 2B is an illustration of a front cross-sectional view of the modified modulus composite laminate assembly of FIG. 2A being co-cured in an autoclave;
FIG. 2C is an illustration of a front cross-sectional view of an exemplary modified modulus composite laminate system, where a secondary coating is applied to the modified modulus composite laminate assembly of FIG. 2B, that has been co-cured;
FIG. 2D is an illustration of a front cross-sectional view of the modified modulus composite laminate system of FIG. 2C, subjected to a thermal exposure and a moisture exposure;
FIG. 2E is an illustration of a front cross-sectional view of the modified modulus composite laminate system of FIG. 2D, showing a microcrack through the secondary layer and the surface layer;
FIG. 3A is an illustration of a front cross-sectional view of an exemplary modified modulus composite laminate assembly, where a surface layer in the form of a lightning strike protection material assembly is applied to an uncured composite laminate assembly;
FIG. 3B is an illustration of a front cross-sectional view of the modified modulus composite laminate assembly of FIG. 3A being co-cured in an autoclave;
FIG. 3C is an illustration of a front cross-sectional view of an exemplary modified modulus composite laminate system, where a secondary coating is applied to the modified modulus composite laminate assembly of FIG. 3B, that has been co-cured;
FIG. 3D is an illustration of a front cross-sectional view of the modified modulus composite laminate system of FIG. 3C, subjected to a thermal exposure and a moisture exposure;
FIG. 3E is an illustration of a front cross-sectional view of the modified modulus composite laminate system of FIG. 3D, showing a microcrack through the secondary layer and the surface layer;
FIG. 4A is an illustration of a front cross-sectional view of an exemplary uncured composite laminate assembly of an exemplary modified modulus composite laminate system;
FIG. 4B is an illustration of a front cross-sectional view of the composite laminate assembly of FIG. 4A being cured in an autoclave;
FIG. 4C is an illustration of a front cross-sectional view of an exemplary modified modulus composite laminate system, where a surface layer in the form of a resin repair layer is applied to the composite laminate assembly of FIG. 4B, that has been cured, and a secondary coating is applied to the surface layer;
FIG. 4D is an illustration of a front cross-sectional view of the modified modulus composite laminate system of FIG. 4C, subjected to a thermal exposure and a moisture exposure;
FIG. 4E is an illustration of a front cross-sectional view of the modified modulus composite laminate system of FIG. 4D, showing a microcrack through the secondary layer and the surface layer;
FIG. 5 is an illustration of a flow diagram of an exemplary version of a method;
FIG. 6 is an illustration of a perspective view of an aircraft having one or more composite structures that incorporate an exemplary modified modulus composite laminate system;
FIG. 7 is an illustration of a flow diagram of an exemplary aircraft manufacturing and service method; and
FIG. 8 is an illustration of an exemplary block diagram of an aircraft.

The figures shown in this disclosure represent various features of the versions presented, and only differences will be discussed in detail.

### DETAILED DESCRIPTION

Disclosed versions will now be described more fully hereinafter with reference to the accompanying drawings, in which some, but not all of the disclosed versions are shown. Indeed, several different versions may be provided and should not be construed as limited to the versions set forth herein. Rather, these versions are provided so that this disclosure will be thorough and fully convey the scope of the disclosure to those skilled in the art.

This specification includes references to "one version" or "a version". The instances of the phrases "one version" or "a version" do not necessarily refer to the same version. Particular features, structures, or characteristics may be combined in any suitable manner consistent with this disclosure. All features disclosed in the specification, including the claims, abstract, and drawings, and all the steps in any method or process disclosed, may be combined in any combination, except combinations where at least some of such features and/or steps are mutually exclusive. Each feature disclosed in the specification, including the claims, abstract, and drawings, can be replaced by alternative features serving the same, equivalent, or similar purpose, unless expressly stated otherwise.

As used herein, "comprising" is an open-ended term, and as used in the claims, this term does not foreclose additional structures or steps.

As used herein, "configured to" means various parts or components may be described or claimed as "configured to" perform a task or tasks. In such contexts, "configured to" is used to connote structure by indicating that the parts or components include structure that performs those task or tasks during operation. As such, the parts or components can be said to be configured to perform the task even when the specified part or component is not currently operational (e.g., is not on).

As used herein, the terms "first", "second", etc., are used as labels for nouns that they precede, and do not imply any type of ordering (e.g., spatial, temporal, logical, etc.).

As used herein, an element or step recited in the singular and preceded by the word "a" or "an" should be understood as not necessarily excluding the plural of the elements or steps. As used herein, the term "and/or" includes any and all combinations of one or more of the associated listed items. As also used herein, the term "combinations thereof" includes combinations having at least one of the associated listed items, wherein the combination can further include additional, like non-listed items.

As used herein, the phrase "at least one of," when used with a list of items, means different combinations of one or more of the listed items may be used, and only one of each item in the list may be needed. In other words, "at least one of" means any combination of items and number of items may be used from the list, but not all of the items in the list are required. The item may be a particular object, a thing, or a category.

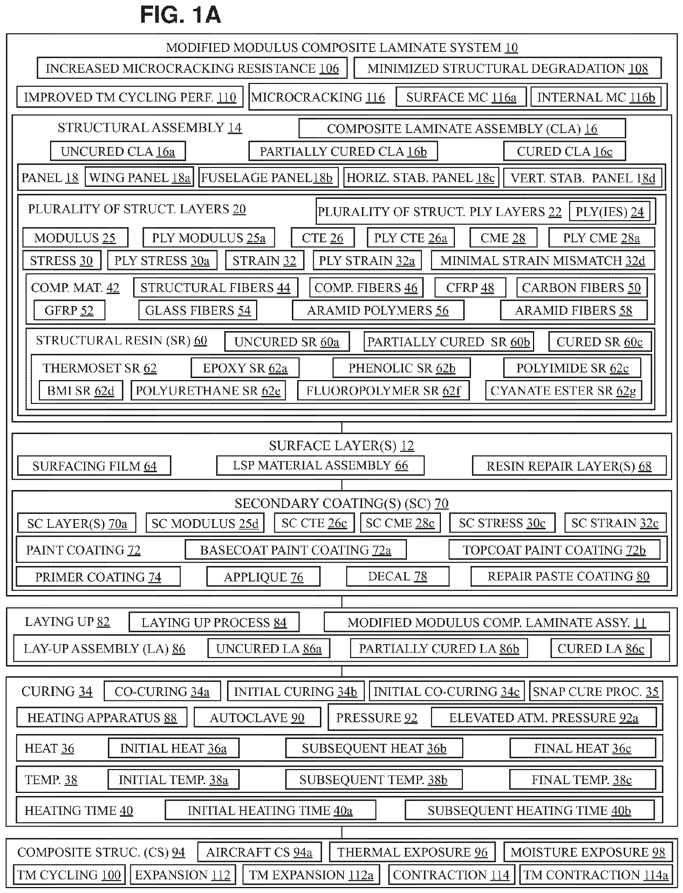

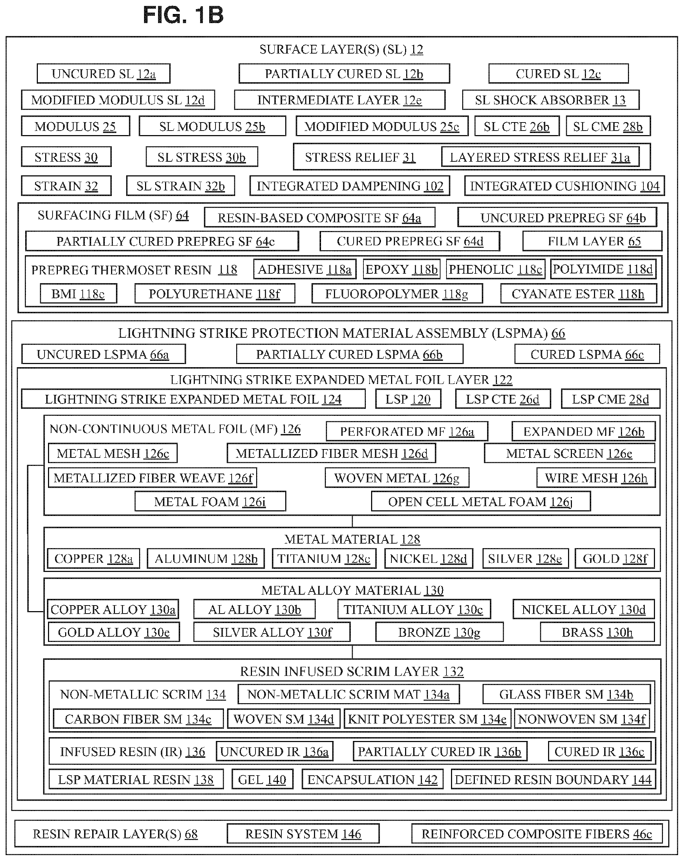

Now referring to FIGS. 1A-1B, FIG. 1A is an illustration of a block diagram of an exemplary modified modulus composite laminate system 10, and FIG. 1B is an illustration of a block diagram of exemplary surface layers 12 that may be used in the modified modulus composite laminate system 10. The blocks in FIGS. 1A-1B represent elements, and lines connecting the various blocks do not imply any particular dependency of the elements. Furthermore, the connecting lines shown in the various Figures contained herein are intended to represent example functional relationships and/or physical couplings between the various elements, but it is noted that other alternative or additional functional relationships or physical connections may be present in versions disclosed herein. One or more of these blocks may be combined, divided, or combined and divided into different blocks when implemented in an illustrative example. Further, the illustrations of the modified modulus composite laminate system 10 in FIG. 1A and the surface layers 12 in FIG. 1B are not meant to imply physical or architectural limitations to the manner in which an illustrative example may be implemented. Other components in addition to, or in place of, the ones illustrated may be used. Some components may be unnecessary.

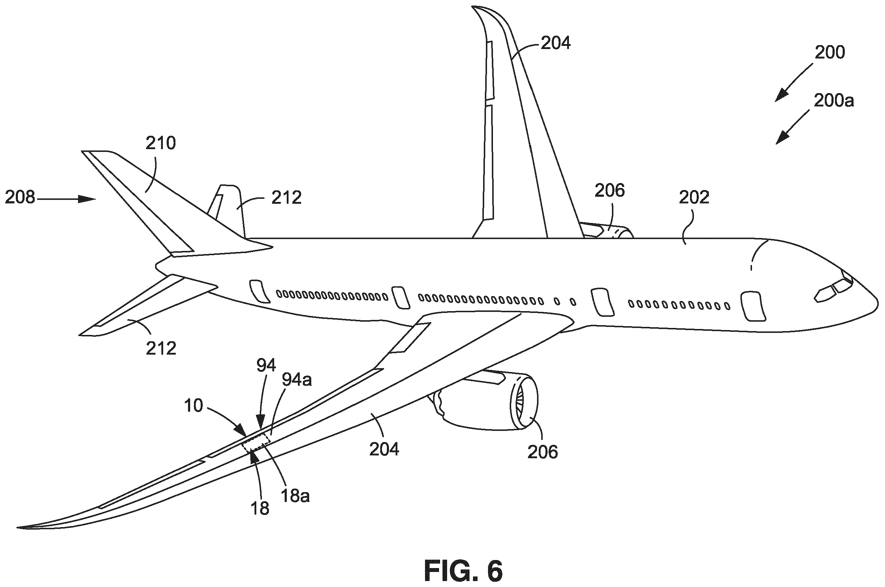

Now referring to FIG. 1A, as shown in FIG. 1A, the modified modulus composite laminate system 10 comprises a structural assembly 14, such as in the form of a composite laminate assembly (CLA) 16 that is cured or configured to be cured. As shown in FIG. 1A, the composite laminate assembly 16 can be in the form of an uncured composite laminate assembly (CLA) 16a, a partially cured composite laminate assembly (CLA) 16b, and/or a cured composite laminate assembly (CLA) 16c. In one exemplary form, as shown in FIG. 1A, the structural assembly 14, such as the composite laminate assembly 16, comprises a panel 18 (see also FIG. 6), such as a wing panel 18a (see also FIG. 6) of a wing 204 (see FIG. 6) of an aircraft 200a (see FIG. 6), a fuselage panel 18b of a fuselage 202 (see FIG. 6) of the aircraft 200a, a horizontal stabilizer (HORIZ. STAB.) panel 18c of a horizontal stabilizer 212 (see FIG. 6) of the aircraft 200a, a vertical stabilizer (VERT. STAB.) panel 18d of a vertical stabilizer 210 (see FIG. 6) of the aircraft 200a, or another suitable panel 18 or structural assembly 14.

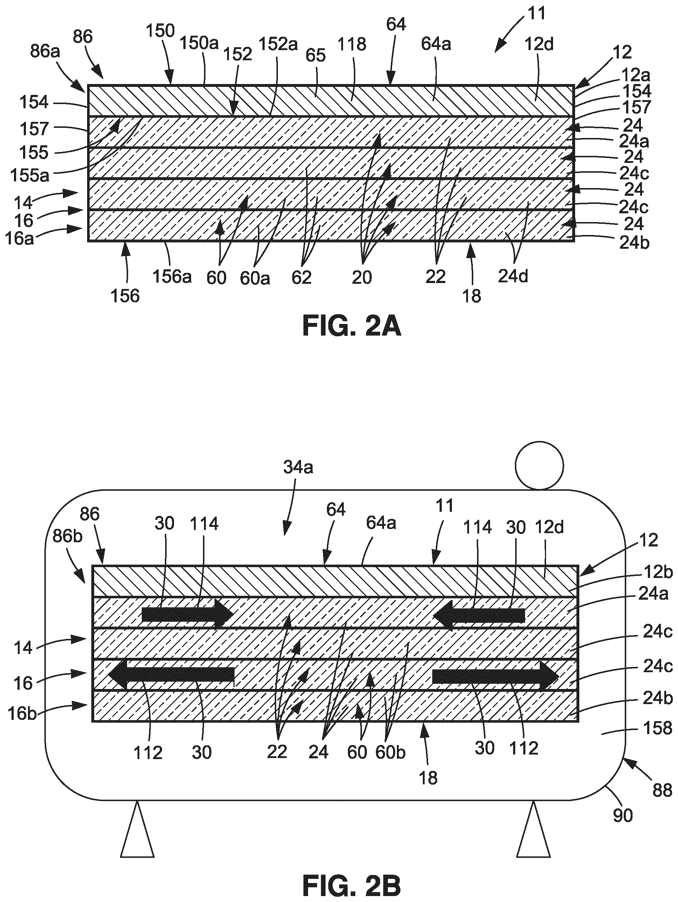

The structural assembly 14, such as the composite laminate assembly 16, for example, in the form of the uncured composite laminate assembly 16a, the partially cured composite laminate assembly 16b, and the cured composite laminate assembly 16c, comprises a plurality of structural (STRUCT.) layers 20 (see FIGS. 1A, 2A, 3A, 4A), such as a plurality of structural (STRUCT.) ply layers 22 (see FIGS. 1A, 2A, 3A, 4A). Each structural ply layer 22 comprises a ply 24 (see FIGS. 1A, 2A, 3A, 4A), and the plurality of structural ply layers 22 comprise a plurality of plies 24. As shown in FIGS. 2A, 3A, 4A, the plurality of plies 24 comprise a top ply 24a, a bottom ply 24b, and two (2) intermediate plies 24c. However, the plurality of plies 24 may comprise greater than two (2) intermediate plies 24c. As shown in FIGS. 2A, 3A, 4A, the plurality of plies 24 are in the form of structural plies 24d.

As shown in FIG. 1A, each structural ply layer 22 has a modulus 25, such as a ply modulus 25a, a coefficient of thermal expansion (CTE) 26, such as a ply coefficient of thermal expansion (CTE) 26a, and a coefficient of moisture expansion (CME) 28, such as a ply coefficient of moisture expansion (CME) 28a. The ply modulus 25a, the ply CTE 26a, and the ply CME 28a are the same in each structural ply layer 22.

As further shown in FIG. 1A, each structural ply layer 22 has stress 30, such as ply stress 30a, and strain 32, such as ply strain 32a, that occurs during curing 34, such as in a snap cure process (PROC.) 35, with heat 36 and temperatures 38 that are elevated during a heating time 40. During curing 34, the different structural ply layers 22 want to expand to different sizes, relative to each other, due to the anisotropic nature of composite material (COMP. MAT.) 42 making up each ply 24 of each structural ply layer 22. However, since the structural ply layers 22 are bonded together, the expanding is captured as stress 30, such as ply stress 30a.

As shown in FIG. 1A, the plurality of structural layers 20, such as the plurality of structural ply layers 22, and the plies 24 each comprises a composite material 42 having structural fibers 44, such as composite (COMP.) fibers 46. As further shown in FIG. 1A, the composite material 42 may comprise one or more of, one or more carbon-fiber reinforced polymers (CFRP(S)) 48, or carbon-fiber reinforced plastics, having carbon fibers 50, one or more glass-fiber reinforced polymers (GFRP(S)) 52, or glass-fiber reinforced plastics, having glass fibers 54 or fiberglass fibers, one or more aramid polymers 56, or aramid plastics, having aramid fibers 58, where "aramid" means aromatic polyamide, or another suitable composite material 42 having structural fibers 44, such as composite fibers 46.

The composite laminate assembly 16 that is uncured, partially cured, and cured comprises the plurality of structural ply layers 22 preimpregnated with a structural resin (SR) 60 (see FIG. 1A), such as a structural prepreg resin. As shown in FIG. 1A, the structural resin 60 may be in the form of an uncured structural resin (SR) 60a, a partially cured structural resin (SR) 60b, and a cured structural resin (SR) 60c.

The composite material 42 comprises a matrix of structural resin 60 (see FIG. 1A) reinforced with the composite fibers 46. Each structural layer 20, such as each structural ply layer 22, may include a plurality of the structural fibers 44, such as the composite fibers 46, which may be at least partially, or even completely, encapsulated within the structural resin 60, within the uncured structural resin 60a (see FIG. 1A), within the partially cured structural resin 60b (see FIG. 1A), and/or within the cured structural resin 60c (se FIG. 1A). Examples of the plurality of the structural fibers 44, such as the composite fibers 46, include a plurality of carbon fibers 50, a plurality of glass fibers 54 or fiberglass fibers, and/or a plurality of aramid fibers 58, or other suitable structural fibers 44. In a preferred example, the structural layer 20 and/or the structural fibers 44, such as the composite fibers 46, include and/or are arranged in the plurality of structural ply layers 22 with structural plies 24d that are layered made of composite material 42, which includes the structural resin 60, such as in the form of the uncured structural resin 60a, the partially cured structural resin 60b, and/or the cured structural resin 60c.

The plurality of structural layers 20 may include the plurality of structural ply layers 22 made of composite material 42 that includes the structural resin 60, such as the uncured structural resin 60a. Each of the plurality of structural layers 20, such as the plurality of structural ply layers 22, may include a plurality of structural fibers 44, such as a plurality of composite fibers 46, at least partially encapsulated within the structural resin 60, such as the uncured structural resin 60a, the partially cured structural resin 60b, and/or the cured structural resin 60c. Each of the plurality of structural layers 20, such as the plurality of structural ply layers 22, may include a plurality of carbon fibers 50, at least partially encapsulated within the structural resin 60, such as the uncured structural resin 60a, the partially cured structural resin 60b, and/or the cured structural resin 60c.

As shown in FIG. 1A, in some versions, the structural resin (SR) 60 preferably comprises a thermoset structural resin (SR) 62, comprising one or more of, an epoxy structural resin (SR) 62a, a phenolic structural resin (SR) 62b, a polyimide structural resin (SR) 62c, a bismaleimide structural resin (BMI SR) 62d, such as a polybismaleimide structural resin, a polyurethane structural resin (SR) 62e, a fluoropolymer structural resin (SR) 62f, a cyanate ester structural resin (SR) 62g, or another suitable thermoset structural resin 62. In some other versions, the structural resin 60 may include and/or comprise any suitable resin that may have, define, and/or exhibit a structural resin viscosity, a structural resin cure profile, a structural resin rheology, a structural resin gel point temperature, and/or a structural resin gel time.

As further shown in FIG. 1A, the modified modulus composite laminate system 10 further comprises one or more surface layers 12 applied directly to the structural assembly 14, such as the composite laminate assembly 16. The surface layer 12 or surface layers 12 is/are either applied prior to curing 34, such as co-curing 34a (see FIG. 1A), of the structural assembly 14, such as the composite laminate assembly 16, or applied after the curing 34, such as the co-curing 34a, of the structural assembly 14, such as the composite laminate assembly 16.

As shown in FIG. 1A, in some versions, the surface layer 12, or surface layers 12, comprise a surfacing film 64. The surfacing film 64 is preferably applied directly to the structural assembly 14, such as the composite laminate assembly 16, prior to the curing 34, such as the co-curing 34a, with the structural assembly 14, such as the composite laminate assembly 16.

As shown in FIG. 1A, in some other versions, the surface layer 12, or surface layers 12, comprise a lightning strike protection (LSP) material assembly 66. The lightning strike protection material assembly 66 is preferably applied directly to the structural assembly 14, such as the composite laminate assembly 16, prior to the curing 34, such as the co-curing 34a, with the structural assembly 14, such as the composite laminate assembly 16.

As shown in FIG. 1A, in yet other versions, the surface layer 12, or surface layers 12, comprise one or more resin repair layers 68. The one or more resin repair layers 68 is/are preferably applied directly to the structural assembly 14, such as the composite laminate assembly 16, after the curing 34 of the structural assembly 14, such as the composite laminate assembly 16.

In some other versions, the surface layer 12, or surface layers 12, may comprise another suitable type of surface layer 12. The surface layer 12, or layers, such as the surfacing film 64, the lightning strike protection material assembly 66, and the one or more resin repair layers 68, are discussed in further detail below with regard to FIG. 1B.

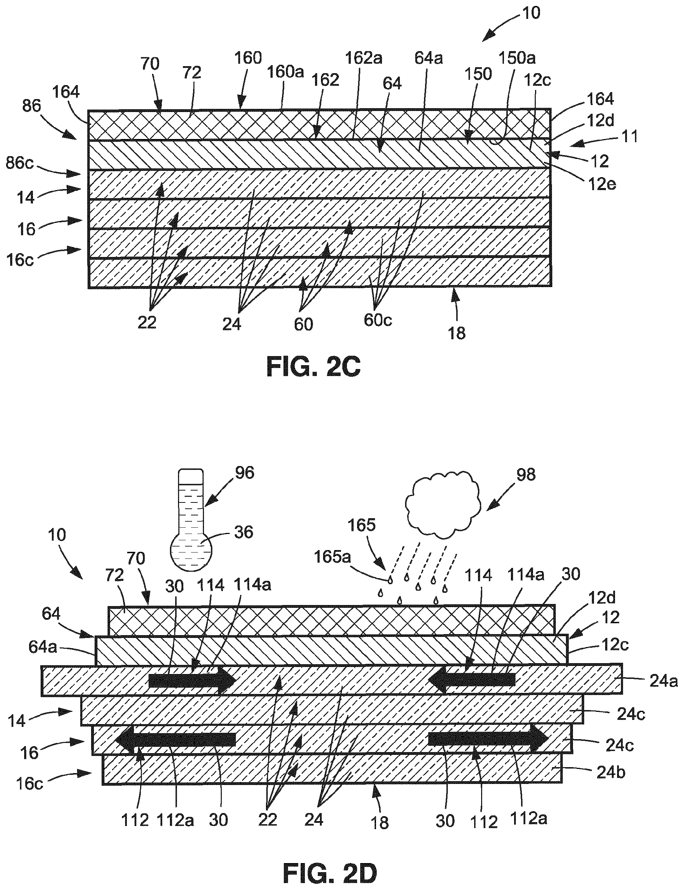

As shown in FIG. 1A, the modified modulus composite laminate system 10 further comprises at least one secondary coating (SC) 70, or coatings, such as at least one secondary coating (SC) layer 70a, or secondary coating layers, applied directly to the surface layer 12, such as a first side 150 (see FIG. 2C), or a top side 150a (see FIG. 2C), of the surface layer 12, or layers, after the curing 34 of the structural assembly 14, such as the composite laminate assembly 16. The at least one secondary coating 70 has a modulus 25 (see FIG. 1A), such as a secondary coating (SC) modulus 25d, that is different from the ply modulus 25a. The modified modulus 25c of the surface layer 12 is modified to be greater than, or equal to, the secondary coating modulus 25d of the at least one secondary coating 70, prior to application of the at least one secondary coating 70 to the surface layer 12, so that the surface layer modulus 25b is already modified to obtain the modified modulus 25c before the surface layer 12 is covered with the secondary coating 70 or secondary coatings 70.

The at least one secondary coating 70 further has a coefficient of thermal expansion (CTE) 26, such as a secondary coating coefficient of thermal expansion (SC CTE) 26c, that is different from the ply coefficient of thermal expansion (CTE) 26a. The at least one secondary coating 70 further has a coefficient of moisture expansion (CME) 28, such as a secondary coating coefficient of moisture expansion (SC CME) 28c, that is different from the ply coefficient of moisture expansion 28a. The at least one secondary coating 70 has stress 30 (see FIG. 1A), such as secondary coating (SC) stress 30c (see FIG. 1A) and has strain 32 (see FIG. 1A), such as secondary coating (SC) strain 32c (see FIG. 1A), when the secondary coating 70 is subjected to a thermal moisture (TM) cycling 100 (see FIG. 1A), or a thermal moisture cycling event.

As used herein, "thermal moisture cycling" or "thermal moisture cycling event" means a process by which a material is exposed to a thermal and/or moisture change during its in-service life, such as absorbing heat or having thermal exposure, or such as absorbing moisture or having moisture exposure, for example, an aircraft moving back-and-forth between a parked position on the ground at ambient temperature or elevated temperatures, and a flight phase in the air at cold or freezing temperatures.

As shown in FIG. 1A, the at least one secondary coating 70 comprises one or more of, a paint coating 72, a basecoat paint coating 72a, a topcoat paint coating 72b, a primer coating 74, an applique 76, a decal 78, a repair paste coating 80, or another suitable secondary coating 70.

As shown in FIG. 1A, the surface layer 12, or layers, such as in the form of the surfacing film 64 and the lightning strike protection material assembly 66, in the uncured form, is laid up, such as laying up 82, via a laying up process 84, on the composite laminate assembly 16, such as the uncured composite laminate assembly 16a, to form a lay-up assembly (LA) 86. Alternatively, the structural assembly 14, such as the composite laminate assembly 16, for example, the uncured composite laminate assembly 16a, may be laid up on the surface layer 12, or layers, such as in the form of the surfacing film 64 or the lightning strike protection material assembly 66.

As shown in FIG. 1A, the lay-up assembly (LA) 86 may be in the form of an uncured lay-up assembly (LA) 86a, a partially cured lay-up assembly (LA) 86b, and/or a cured lay-up assembly (LA) 86c, depending on the stage of curing 34 or co-curing 34a, such as before curing 34 or co-curing 34a, during curing 34 or co-curing 34a, or after, or post, curing 34 or co-curing 34a, where co-curing cures layers simultaneously. The lay-up assembly 86, such as the uncured lay-up assembly 86a, comprising the surface layer 12, such as the surfacing film 64 that is uncured, or the lightning strike protection material assembly 66 that is uncured, that laid up on, and coupled to, the uncured composite laminate assembly 16a, comprises a modified modulus composite laminate assembly (ASSY.) 11 (see FIG. 1A).

In some versions, where the surface layer 12 comprises one or more resin repair layers 68, the uncured composite laminate assembly 16a is cured to obtain the cured composite laminate assembly 16c, and the surface layer 12 in the form of the one or more resin repair layers 68 is/are applied to the cured composite laminate assembly 16c after the curing 34.

For curing 34, such as co-curing 34a, the modified modulus composite laminate assembly 11 comprising the surface layer 12, or layers, in the form of the surfacing film 64 or the lightning strike protection material assembly 66, in the uncured stage, coupled, or attached, to the uncured composite laminate assembly 16a, is placed or positioned within a heating apparatus 88 (see FIG. 1A), such as an autoclave 90 (see FIG. 1A), or another suitable heating apparatus 88, to undergo curing 34 (see FIG. 1A) or co-curing 34a (see FIG. 1A). Preferably, the uncured lay-up assembly 86a, comprising the surface layer 12, such as the surfacing film 64 or the lightning strike protection material assembly 66, laid up on, and coupled to, the uncured composite laminate assembly 16a, undergoes the snap cure process (PROC.) 35 (see FIG. 1A), such as disclosed in U.S. Patent Number 11,752,708 B2, which is hereby incorporated by reference in its entirety.

During curing 34 or co-curing 34a in the heating apparatus 88, such as the autoclave 90, the lay-up assembly 86, such as the uncured lay-up assembly 86a, comprising the surface layer 12, such as the uncured surface layer 12a, for example, the surfacing film 64, such as a resin-based composite surfacing film 64a (see FIG. 1B), in the form of an uncured prepreg surfacing film 64b (see FIG. 1B), or for example, the lightning strike protection material assembly 66, such as an uncured lightning strike protection material assembly 66a (see FIG. 1B, laid up on, and coupled to, the uncured composite laminate assembly 16a, is heated, such as initially heating, with heat 36 (see FIG. 1A), such as an initial heat 36a (see FIG. 1A), at a temperature (TEMP.) 38 (see FIG. 1A), such as an initial temperature (TEMP.) 38a (see FIG. 1A), to generate the partially cured lay-up assembly 86b (see FIG. 1A) comprising a partially cured surface layer 12b (see FIG. 1B), such as a partially cured prepreg surfacing film 64c (see FIG. 1B), or a partially cured lightning strike protection material assembly 66b (see FIG. 1B), laid up on, and coupled to, the partially cured composite laminate assembly 16b (see FIG. 1A). The initial temperature 38a with the initial heat 36a and initially heating is preferably at least 88° C (eighty-eight degrees Celsius, 190 degrees Fahrenheit (° F)) and at most 140° C (one-hundred forty degrees Celsius, 284 degrees Fahrenheit (° F)). The initially heating includes initially heating for a heating time 40 (see FIG. 1A), such as an initial heating time 40a (see FIG. 1A), of at least 2 (two) minutes and at most 30 (thirty) minutes. The initially heating with the initial heat 36a is sufficient to gel a prepreg thermoset resin 118 (see FIG. 1B), such as an infused resin 136, which is uncured, to become a gel 140 (see FIG. 1B), but the initially heating with the initial heat 36a is insufficient to gel the structural resin 60, which is uncured.

During the curing 34 or the co-curing 34a in the heating apparatus 88, such as the autoclave 90, the partially cured lay-up assembly 86b comprising the partially cured surface layer 12b (see FIG. 1B), such as the partially cured prepreg surfacing film 64c (see FIG. 1B), or the partially cured lightning strike protection material assembly 66b (see FIG. 1B), laid up on, and coupled to, the partially cured composite laminate assembly 16b (see FIG. 1A), is then subsequently heated, such as subsequently heating, with a subsequent heat 36b (see FIG. 1A), at a desired subsequent temperature (TEMP.) 38b (see FIG. 1A), until it reaches a final heat 36c (see FIG. 1A), and to a final temperature (TEMP.) 38c (see FIG. 1A), which is greater than the initial temperature 38a, to generate the cured lay-up assembly 86c (see FIG. 1A) comprising a cured surface layer 12c (see FIG. 1B), such as a cured prepreg surfacing film 64d (see FIG. 1B), or a cured lightning strike protection material assembly 66c (see FIG. 1B), laid up on, and coupled to, the cured composite laminate assembly 16c. A combination of the initially heating, the subsequently heating, and the final heating is sufficient to cure, such as fully cure, both the prepreg thermoset resin 118, such as the infused resin 136, and the structural resin 60.

The subsequently heating with the subsequent heat 36b includes heating for a subsequent heating time 40b (see FIG. 1A) of at least 15 (fifteen) minutes and at most 120 (one hundred twenty) minutes. The final temperature 114c, such as the final cure temperature, with the final heat 36c (see FIG. 1A) and the final heating is preferably at least 120° C (one-hundred twenty degrees Celsius, 248 degrees Fahrenheit (° F)), and at most 260° C (two-hundred sixty degrees Celsius, 500 degrees Fahrenheit (° F)). A difference between the final temperature 38c, such as the final cure temperature, and the initial temperature 38a (see FIG. 1A) is at least 20° C (twenty degrees Celsius, 68 degrees Fahrenheit (° F)). The initially heating includes initially heating for the initial heating time 40a, wherein the subsequently heating includes heating for a subsequent heating time 40b, and further wherein a difference between the subsequent heating time 40b and the initial heating time 40a is at least 10 (ten) minutes.

The curing 34 or the co-curing 34a of the lay-up assembly 86 comprising the uncured surface layer 12a (see FIG. 1B), such as the uncured prepreg surfacing film 64b (see FIG. 1B), or the uncured lightning strike protection material assembly 66a (see FIG. 1B), laid up on, and coupled to, the uncured composite laminate assembly 16a (see FIG. 1A), in the heating apparatus 88, such as the autoclave 90, with heat 36, may further comprise applying a pressure 92 (see FIG. 1A) to at least one of, the uncured composite laminate assembly 16a and during the initially heating at the initial heat 36a, or the partially cured composite laminate assembly 16b and during the subsequently heating at the subsequent heat 36b. In some examples, applying the pressure 92 includes applying an elevated atmospheric (ATM.) pressure 92a at 0 to 150 psi (zero to one-hundred fifty pounds per square inch) (0 atm (atmosphere) to 10.2 atm (atmospheres)) (0 to 1034 kPa) to the uncured composite laminate assembly 16a and/or to the partially cured composite laminate assembly 16b. In some examples, the applying the pressure 92 includes utilizing the heating apparatus 88, such as the autoclave 90, autoclaving the uncured composite laminate assembly 16a during the initially heating, and/or autoclaving the partially cured composite laminate assembly 16b during the subsequently heating.

As shown in FIG. 1A, after the curing 34 or the co-curing 34a, is complete or final, for example, after completion of the snap cure process 35, the modified modulus composite laminate assembly 11 is in the cured state and the cured lay-up assembly 86c is obtained. In some versions, including this version, the one or more secondary coatings 70 is/are applied to the cured surface layer 12c (see FIG. 1B) comprising the cured prepreg surfacing film 64d or the cured lightning strike protection material assembly 66c, to obtain the modified modulus composite laminate system 10 (see FIG. 1A). In some other versions, the surface layer 12 in the form of one or more resin repair layers 68 is applied to the cured composite laminate assembly 16c, and then the one or more secondary coatings 70 is/are applied to the one or more resin repair layers 68.

As shown in FIG. 1A, the modified modulus composite laminate system 10 may be incorporated in, or may comprise, a composite structure (STRUC.) (CS) 94, such as an aircraft composite structure (CS) 94a, in the form of a wing 204 (see FIG. 6) of an aircraft 200a (see FIG. 6), a fuselage 202 (see FIG. 6) of the aircraft 200a, a horizontal stabilizer 212 (see FIG. 6) of the aircraft 200a, or another suitable composite structure 94 or another suitable aircraft composite structure 94a.

In general, a composite structure is a structure that is formed from two or more constituent component materials with different physical and/or chemical properties that, when combined, produce a composite material having characteristics that are different than the characteristics of the individual components materials. As an example, one type of composite material is carbon fiber reinforced plastic ("CFRP"). CFRP generally includes one or more composite layers or plies laminated together to form a sheet, laminate or layup. Each of the composite layers or plies can include a reinforcement material and a matrix material. The matrix material surrounds, binds and supports the reinforcement material. The reinforcement material provides structural strength to the matrix material and the CFRP. The matrix material is generally a non-conductive polymer such as an epoxy resin. The reinforcement material generally consists of strands of carbon fiber, which are electrically conductive.

When the modified modulus composite laminate system 10, and the composite structure 94, such as the aircraft composite structure 94a, with the modified modulus composite laminate system 10, is subjected to one or more of, a thermal exposure 96 (see FIG. 1A), and a moisture exposure 98 (see FIG. 1A), in a thermal moisture cycling 100 (see FIG. 1A), the surface layer 12 with the modified modulus 25c, such as a modified modulus surface layer 12d (see FIG. 1B), creates a stress relief 31 (see FIG. 1B), such as a layered stress relief 31a (see FIG. 1B), through a thickness of the modified modulus composite laminate system 10. The surface layer 12 with the modified modulus 25c provides an integrated dampening 102 (see FIG. 1B) and an integrated cushioning 104 (see FIG. 1B) between the secondary coating 70, or coatings, and the plurality of structural ply layers 22 of the composite laminate assembly 16, to further provide an increased microcracking resistance 106 (see FIG. 1A) and a minimized structural degradation 108 (see FIG. 1A), as well as an improved thermal moisture (TM) cycling performance (PERF.) 110 (see FIG. 1A), for the modified modulus composite laminate system 10, and the composite structure 94, such as the aircraft composite structure 94a, with the modified modulus composite laminate system 10.

As the modified modulus composite laminate system 10, and the composite structure 94, such as the aircraft composite structure 94a, with the modified modulus composite laminate system 10, are subjected to thermal exposure 96 and moisture exposure 98 of the thermal moisture cycling 100, the different materials of the modified modulus composite laminate system 10, such as the plurality of structural ply layers 22 of the composite laminate assembly 16, the surface layer 12, or layers, with the modified modulus 25c, and the at least one secondary coating 70 may exhibit different amounts of expansion 112 (see FIG. 1A), such as a thermal moisture (TM) expansion 112a (see FIG. 1A), and different amounts of contraction 114 (see FIG. 1A), such as a thermal moisture (TM) contraction 114a (see FIG. 1A), which is exacerbated by stress 30 (see FIG. 1A), such as ply stress 30a, surface layer stress 30b, and/or secondary coating stress 30c. Due to the surface layer 12 with the modified modulus 25c, or the modified modulus surface layer 12d, there is minimal strain mismatch 32d (see FIG. 1A) between the modified modulus surface layer 12d, or layers, and the secondary coating 70, or coatings, and the modified modulus surface layer 12d safely absorbs the size change between the modified modulus surface layer 12d and the plies 24 of the structural ply layers 22 below, resulting in minimal microcracking 116 (see FIGS. 1A, 2E, 3E, 4E), or cracking, and minimal formation of microcracks or cracks, to obtain increased microcracking resistance 106 (see FIG. 1A). The modification of the modulus 25 of the surface layer 12, to obtain the modified modulus 25c and the modified modulus surface layer 12d, creates the stress relief 31 (see FIG. 1B), such as the layered stress relief 31a (see FIG. 1B), through the thickness of the modified modulus composite laminate system 10 and between the structural ply layers 22 of the composite laminate assembly 16 due to strain 32 (see FIG. 1) that is thermally induced and created by elevated temperatures 38 (see FIG. 1A) during curing 34 or co-curing 34a.

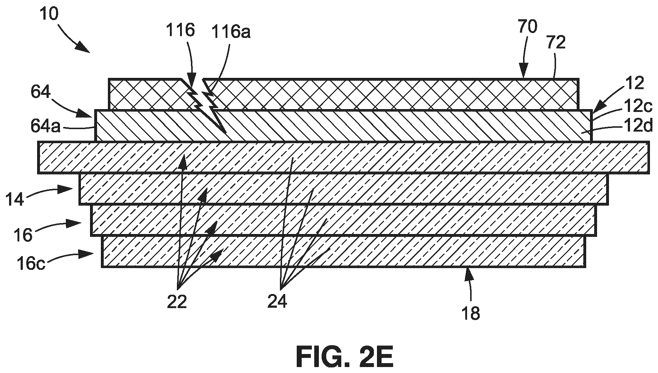

Creation of the stress relief 31, such as the layered stress relief 31a, through the thickness of the modified modulus composite laminate system 10 by material design and modification of the modulus 25 of the surface layer 12 provides the improved thermal moisture cycling performance 110 (see FIG. 1A), as measured by minimal, or no, microcracking 116 (see FIGS. 1A, 2E), including minimal, or no, surface microcracking (MC) 116a (see FIGS. 1A, 2E), through the secondary coating 70 and the surface layer 12, and no, or very minimal, internal microcracking (MC) 116b through, and into, the structural ply layers 22 of the composite laminate assembly 16, while maintaining equivalent or near-equivalent levels of secondary coating 70 adhesion, for example, paint coating 72 adhesion.

Now referring to FIG. 1B, FIG. 1B shows exemplary versions of the surface layer (SL) 12, or layers, that may be used in the modified modulus composite laminate system 10 of FIG. 1A, where the surface layer 12, or layers, can be in the form of an uncured surface layer (SL) 12a, a partially cured surface layer (SL) 12b, and/or a cured surface layer (SL) 12c. The surface layer 12, or layers, comprise an intermediate layer 12e (see FIG. 1B), or layers, stacked under, and in between, the secondary coating 70, or coatings, which is/are applied over the surface layer 12, or layers, and stacked over the plurality of structural ply layers 22 of the composite laminate assembly 16, which is underlying the surface layer 12, or layers.

As further shown in FIG. 1B, in some versions, the surface layer 12 comprises, and functions as, a surface layer (SL) shock absorber 13. The surface layer shock absorber 13 absorbs different stresses 30 (see FIG. 1B) and different strains 32 (see FIG. 1B) of the at least one secondary coating 70 (see FIG. 1A) and the plurality of structural ply layers 22 (see FIG. 1A) of the composite laminate assembly 16 (see FIG. 1A), when the modified modulus composite laminate system 10 (see FIG. 1A) is subjected to one or more of, the thermal exposure 96 (see FIG. 1A), and the moisture exposure 98 (see FIG. 1A), resulting in the improved thermal moisture cycling performance 110 (see FIG. 1A) of the modified modulus composite laminate system 10 and the composite structure 94 (see FIG. 1A), such as the aircraft composite structure 94a (see FIG. 1A), with the modified modulus composite laminate system 10.

As shown in FIG. 1B, the surface layer 12, such as each of the one or more surface layers 12, has a modulus 25, such as a surface layer (SL) modulus 25b, that is modified to obtain a modified modulus 25c. The modified modulus 25c of the surface layer 12 is less than, or equal to, the ply modulus 25a of the plies 24. The modified modulus 25c of the surface layer 12, such as the modified modulus surface layer 12d, is modified to be greater than, or equal to, the secondary coating modulus 25d (see FIG. 1A) of the secondary coating 70, and to obtain the modified modulus surface layer (SL) 12d (see FIG. 1B). For example, if the ply modulus 25a is X, the modified modulus 25c of the surface layer 12 is Y, and the secondary coating modulus 25d is Z, the relationship is, X is greater than, or equal to Y, or Y is less than, or equal to, X; and Y is greater than, or equal to Z, or Z is less than, or equal to, Y. In some examples, the modified modulus 25c of the surface layer 12 is an intermediate modulus between the ply modulus 25a and the secondary coating modulus 25d.

As further shown in FIG. 1B, the surface layer 12, such as each of the one or more surface layers 12, has a coefficient of thermal expansion (CTE) 26 (see FIG. 1A), such as a surface layer coefficient of thermal expansion (SL CTE) 26b. The surface layer CTE 26b is different from the ply CTE 26a.

As further shown in FIG. 1B, the surface layer 12, such as each of the one or more surface layers 12, has a coefficient of moisture expansion (CME) 28 (see FIG. 1A), such as a surface layer coefficient of moisture expansion (SL CME) 28b. The surface layer CME is different from the ply CME 28a.

As further shown in FIG. 1B, the surface layer 12, such as each of the one or more surface layers 12, has, or is capable of having, stress 30, such as surface layer (SL) stress 30b, and has, or is capable of having, strain 32, such as surface layer (SL) strain 32b. As discussed above, the modified modulus surface layer 12d, creates the stress relief 31 (see FIG. 1B), such as the layered stress relief 31a (see FIG. 1B), through the thickness of the modified modulus composite laminate system 10, when undergoing thermal exposure 96 (see FIG. 1A), and/or moisture exposure 98 (see FIG. 1A), of thermal moisture cycling 100 (see FIG. 1A).

As shown in FIG. 1B, in some versions, the surface layer 12, such as each of the one or more surface layers 12, may comprise a surfacing film (SF) 64, such as a resin-based composite surfacing film (SF) 64a (see FIG. 1B). The surfacing film 64 may be in the form of an uncured prepreg surfacing film (SF) 64b, a partially cured prepreg surfacing film (SF) 64c, and/or a cured prepreg surfacing film (SF) 64d. In some other versions, the surfacing film 64 may comprise a two part room temperature mixable epoxy resin infused into a carbon or fiberglass or nylon fabric ply or scrim.

As shown in FIG. 1B, the surfacing film 64, such as the resin-based composite surfacing film 64a, comprises a film layer 65 impregnated, or infused with, a prepreg thermoset resin 118. The film layer 65 comprises a scrim weave or a carrier with glass fibers 54 (see FIG. 1A) or fiberglass reinforcement, or with carbon fibers 50 (see FIG. 1A) or carbon fiber reinforcement, with nylon fibers or nylon fiber reinforcement, with polyester fibers or polyester fiber reinforcement, or with another suitable fiber reinforcement. The prepreg thermoset resin 118 comprises one or more of, an adhesive 118a, an epoxy 118b, a phenolic 118c, a polyimide 118d, a bismaleimide (BMI) 118e, a polyurethane 118f, a fluoropolymer 118g, a cyanate ester 118h, or another suitable prepreg thermoset resin 118. The prepreg thermoset resin 118 may further comprise an ultraviolet light-resistant prepreg thermoset resin, an aliphatic epoxy prepreg thermoset resin, a fire-retardant prepreg thermoset resin, or another suitable prepreg thermoset resin 118.

As shown in FIG. 1B, in some versions, the surface layer 12, such as each of the one or more surface layers 12, may comprise a lightning strike protection material assembly (LSPMA) 66 applied directly to the composite laminate assembly 16, prior to the curing 34, or the co-curing 34a, of the composite laminate assembly 16, and co-cured with the composite laminate assembly 16. The lightning strike protection material assembly 66 provides lightning strike protection (LSP) 120 (see FIG. 1B) to the modified modulus composite laminate system 10, and to the composite structure 94, such as the aircraft composite structure 94a, with the modified modulus composite laminate system 10.

As shown in FIG. 1B, the lightning strike protection material assembly (LSPMA) 66 may be in the form of an uncured lightning strike protection material assembly (LSPMA) 66a, a partially cured lightning strike protection material assembly (LSPMA) 66b, and/or a cured lightning strike protection material assembly (LSPMA) 66c. The lightning strike protection material assembly 66 comprises a lightning strike expanded metal foil layer 122 (see FIG. 1B) comprising a lightning strike expanded metal foil 124 (see FIG. 1B). As shown in FIG. 1B, the lightning strike expanded metal foil 124 has a lightning strike protection (LSP) coefficient of thermal expansion (CTE) 26d, and a lightning strike protection (LSP) coefficient of moisture expansion (CME) 28d.

As shown in FIG. 1B, the lightning strike expanded metal foil 124 comprises a non-continuous metal foil (NON-CONT. MF) 126 comprising one or more of, a perforated metal foil (MF) 126a, an expanded metal foil (MF) 126b, a metal mesh 126c, a metallized fiber mesh 126d, a metal screen 126e, a metallized fiber weave 126f, a woven metal 126g, a wire mesh 126h, a metal foam 126i, an open cell metal foam 126j, or another suitable non-continuous metal foil 126.

As shown in FIG. 1B, the lightning strike expanded metal foil 124 further comprises a metal material 128 or a metal alloy material 130. As further shown in FIG. 1B, the metal material 128 comprises one or more of, copper 128a, aluminum 128b, titanium 128c, nickel 128d, gold 128e, silver 128f, or another suitable metal material 128. As further shown in FIG. 1B, the metal alloy material 130 comprises one or more of, copper alloy 130a, aluminum (AL) alloy 130b, titanium alloy 130c, nickel alloy 130d, gold alloy 130e, silver alloy 130f, bronze 130g, brass 130h, or another suitable metal alloy material 130.

As shown in FIG. 1B, in one exemplary version, the lightning strike protection material assembly 66 further comprises a resin infused scrim layer 132 laminated to the lightning strike expanded metal foil layer 122. As further shown in FIG. 1B, the resin infused scrim layer 132 comprises a non-metallic scrim 134. As further shown in FIG. 1B, the non-metallic scrim 134 comprises one of, a non-metallic scrim mat (SM) 134a, a glass fiber scrim mat (SM) 134b, a carbon fiber scrim mat (SM) 134c, a woven scrim mat (SM) 134d, a knit polyester scrim mat (SM) 134e, a nonwoven scrim mat (SM) 134f, or another suitable non-metallic scrim 134. The non-metallic scrim 134 may further comprise a scrim weave or a carrier with glass fibers 54 (see FIG. 1A) or fiberglass reinforcement, or with carbon fibers 50 (see FIG. 1A) or carbon fiber reinforcement, with nylon fibers or nylon fiber reinforcement, with polyester fibers or polyester fiber reinforcement, or with another suitable fiber reinforcement.

As further shown in FIG. 1B, the resin infused scrim layer 132 comprises the non-metallic scrim 134 infused with an infused resin (IR) 136, also referred to as a lightning strike protection material resin 138. As shown in FIG. 1B, the infused resin 136 can be in the form of an uncured infused resin (IF) 136a, a partially cured infused resin (IR) 136b, and/or a cured infused resin (IR) 136c. For example, the uncured infused resin 136a is in the uncured stage before curing 34 or co-curing 34a, the partially cured infused resin 136b is in the partially cured stage during curing 34 or co-curing 34a, and the cured infused resin 136c is in the cured stage after, or post, curing 34 or co-curing 34a. When the infused resin 136 is initially heated with curing 34 or co-curing 34a, the initial heating is sufficient to gel the infused resin 136, such as the uncured infused resin 136a, into a gel 140 (see FIG. 1A).

The infused resin 136 comprises a prepreg thermoset resin 118 (see FIG. 1B) like the prepreg thermoset resin 118 of the surfacing film 64, including as shown in FIG. 1B, adhesive 118a, epoxy 118b, phenolic 118c, polyimide 118d, bismaleimide (BMI) 118e, polyurethane 118f, fluoropolymer 118g, cyanate ester 118h, or another suitable prepreg thermoset resin 118. The infused resin 136 may further comprise an ultraviolet light-resistant infused resin, an aliphatic epoxy infused resin, a fire-retardant infused resin, or another suitable infused resin 136.

In some versions, the infused resin 136 a viscosity, such as a tailored viscosity, a cure profile, such as a tailored cure profile, and has a rheology, such as a tailored rheology. As used herein, "tailored viscosity" means a viscosity of a resin, such as an infused resin in a lightning strike protection material assembly, that is related to a lightning strike expanded metal foil, and that is controlled, adjusted, and selected to be different from a viscosity of a structural resin in a structural assembly, such as a composite laminate assembly, to prevent or minimize mixing of the infused resin and the structural resin during co-curing or curing. As used herein, "tailored cure profile" means a cure profile, such as optimized times and temperatures of curing, of a resin, such as an infused resin in a lightning strike protection material assembly, that is controlled, adjusted, and selected to be different from a cure profile of a structural resin in a structural assembly, such as a composite laminate assembly, so the infused resin can initiate crosslinking at a lower temperature, to increase the viscosity of the infused resin quickly, allowing the infused resin to encapsulate a lightning strike expanded metal foil, while maintaining separation and minimal mixing of the infused resin and the structural resin. As used herein, "tailored rheology" means a rheology or a flow behavior relationship between viscosity, for example, gelling and hardening, such as during curing, of a material, and temperature, such as during cure, of a material, such as a resin, including an infused resin in a lightning strike protection material assembly, that is controlled, adjusted, and selected to be different from a rheology of a structural resin in a structural assembly, such as a composite laminate assembly, to prevent or minimize mixing of the infused resin and the structural resin during co-curing or curing, and to provide improved performance of thermal moisture cycling microcrack resistance in co-cured composite structures, such as co-cured composite laminate structures with structural and lightning strike protection components.

The tailored viscosity, the tailored cure profile, and the tailored rheology of the infused resin are related to the lightning strike expanded metal foil 124, and provide a chemical compatibility and a bonding capability between the infused resin 136 and the structural resin 60 (see FIG. 1A), such as a structural prepreg resin, of the structural assembly 14 (see FIG. 1A), such as the composite laminate assembly 16 (see FIG. 1A), coupled, or bonded, to the lightning strike protection material assembly 66.

The lightning strike protection material assembly 66 is configured for laying up 82 (see FIG. 1A) in the laying up process 84 (see FIG. 1A), and is laid up, on the structural assembly 14, such as the composite laminate assembly 16, for example, the uncured composite laminate assembly 16a (see FIG. 1A), comprised, in some versions, of the plurality of structural layers 20 (see FIG. 1A), such as the plurality of structural ply layers 22 (see FIG. 1A), preimpregnated with the structural resin 60. Alternatively, the structural assembly 14, such as the composite laminate assembly 16, for example, the uncured composite laminate assembly 16a, may be laid up on the lightning strike protection material assembly 66. In some versions, the structural resin 60 has a structural resin viscosity, a structural resin cure profile, and a structural resin rheology that are different from the tailored viscosity, the tailored cure profile, and the tailored rheology of the infused resin 136, to prevent mixing of the structural resin 60 and the infused resin 136 during co-curing 34a, or curing 34, and to allow the infused resin 136 to effectively encapsulate, via encapsulation 142 (see FIG. 1B), the lightning strike expanded metal foil 124, and to provide a defined resin boundary 144 (see FIG. 1B). In addition, the tailored viscosity of the infused resin 136 is greater than the structural resin viscosity of the structural resin 60, to prevent the mixing of the infused resin 136 and the structural resin 60 during the co-curing 34a, or the curing 34.

The tailored cure profile of the infused resin 136 initiates crosslinking at a lower temperature 38 (see FIG. 1A), thereby increasing the tailored viscosity of the infused resin 136 quickly, allowing the infused resin 136 to effectively encapsulate the lightning strike expanded metal foil 124, via the encapsulation 142, while maintaining separation and minimal mixing of the infused resin 136 with the structural resin 60. As used herein, "encapsulation" means hardening of an infused resin, such as a thermoset resin, around a lightning strike expanded metal foil, to keep the lightning strike expanded metal foil separate from a structural resin and a composite laminate assembly or structure. For example, during co-curing 34a or curing 34, the infused resin 136 in the non-metallic scrim 134 is forced into openings of the lightning strike expanded metal foil 124, so that the infused resin 136 fully encapsulates, or fully surrounds, the lightning strike expanded metal foil 124.

The tailored viscosity, the tailored cure profile, and the tailored rheology of the infused resin 136 are sufficiently different than the structural resin viscosity, the structural resin cure profile, and the structural resin rheology of the structural resin 60, to ensure the infused resin 136 sufficiently and effectively encapsulates the lightning strike expanded metal foil 124, to provide in-service protection. The infused resin 136 has compatible properties to the structural resin 60, related to thermal moisture cycling 100, and preventing or minimizing resin mixing of the infused resin 136 and the structural resin 60 during co-curing 34a, or curing 34.

In some versions, the lightning strike protection material assembly 66 may further comprise one or more additional layers on top of the lightning strike expanded metal foil layer 122. For example, a thin composite prepreg layer, such as a surfacing film 64, or another suitable layer, may be added to, and applied over, the top of the lightning strike expanded metal foil layer 122, to function as a protective layer, or a reinforcement layer, on top of the lightning strike expanded metal foil layer 122, to protect the lightning strike expanded metal foil layer 122 during subsequent sanding, painting, polishing, or other post-processing secondary coating procedures.

As further shown in FIG. 1B, in yet other versions, the surface layer 12, such as each of the one or more surface layers 12, may comprise one or more resin repair layers 68 applied directly to the composite laminate assembly 16, such as the cured composite laminate assembly 16c (see FIG. 1A), after the curing 34 of the composite laminate assembly 16. In some versions, the resin repair layer 68 comprises a resin system 146 (see FIG. 1B) with reinforced composite fibers 46a (see FIG. 1B). The resin system 146 preferably comprises a prepreg thermoset resin 118 (see FIG. 1B) like the prepreg thermoset resin 118 in the surfacing film 64 and the infused resin 136 in the lightning strike protection material assembly 66, where the prepreg thermoset resin 118 comprises, as shown in FIG. 1B, one or more of, adhesive 118a, epoxy 118b, phenolic 118c, polyimide 118d, bismaleimide (BMI) 118e, polyurethane 118f, fluoropolymer 118g, cyanate ester 118h, or another suitable prepreg thermoset resin 118. The prepreg thermoset resin 118 may further comprise an ultraviolet light-resistant prepreg thermoset resin, an aliphatic epoxy prepreg thermoset resin, a fire-retardant prepreg thermoset resin, or another suitable prepreg thermoset resin 118. In some other versions, the resin repair layer 68 may comprise a two part temperature mixable epoxy resin system infused into a carbon or fiberglass or nylon fabric ply or scrim.

In some other versions, there is provided an aircraft 200a (see FIG. 6) having one or more aircraft composite structures 94a (see FIGS. 1A, 6) with a modified modulus composite laminate system 10, as discussed above. The aircraft 200a comprises the one or more aircraft composite structures 94a. The one or more aircraft composite structure 94a comprise one or more of, a fuselage 202 (see FIG. 6), one or more wings 204 (see FIG. 6), a tail 208 (see FIG. 6) comprising one or more vertical stabilizers 210 (see FIG. 6), and horizontal stabilizers 212 (see FIG. 6), or another suitable aircraft composite structure 94a.

The modified modulus composite laminate system 10 is incorporated in the one or more aircraft composite structures 94a. The modified modulus composite laminate system 10 comprises the composite laminate assembly 16 that is cured and comprised of the plurality of structural ply layers 22 preimpregnated with the structural resin 60. Each structural ply layer 22 has a ply modulus 25a (see FIG. 1A), a ply coefficient of thermal expansion 26a (see FIG. 1A), and a ply coefficient of moisture expansion 28a (see FIG. 1A) that are the same in each structural ply layer 22.

The modified modulus composite laminate system 10 further comprises the surface layer 12 applied directly to the composite laminate assembly 16, either applied prior to curing 34, or co-curing 34a, the composite laminate assembly 16, or applied after the curing 34, or the co-curing 34a, of the composite laminate assembly 16. The surface layer 12 has, a modified modulus 25c that is less than, or equal to, the ply modulus 25a, a surface layer coefficient of thermal expansion 26b that is different from the ply coefficient of thermal expansion 26a, and a surface layer coefficient of moisture expansion 28b that is different from the ply coefficient of moisture expansion 28a.

The modified modulus composite laminate system 10 further comprises at least one secondary coating 70 applied directly to the surface layer 12, after the curing 34, or the co-curing 34a, of the composite laminate assembly 16. The at least one secondary coating 70 has, a secondary coating modulus 25d (see FIG. 1A) that is different from the ply modulus 25a, a secondary coating coefficient of thermal expansion 26c (see FIG. 1A) that is different from the ply coefficient of thermal expansion 26a, and a secondary coating coefficient of moisture expansion 28c (see FIG. 1A) that is different from the ply coefficient of moisture expansion 28a. The at least one secondary coating 70 comprises, as shown in FIG. 1A, one or more of, a paint coating 72, a basecoat paint coating 72a, a topcoat paint coating 72b, a primer coating 74, an applique 76, a decal 78, or a repair paste coating 80.

The modified modulus 25c of the surface layer 12 is modified to be greater than, or equal to, the secondary coating modulus 25d of the at least one secondary coating 70, prior to application of the at least one secondary coating 70 to the surface layer 12. The surface layer modulus 25b (see FIG. 1A) of the surface layer 12 is modified to obtain the modified modulus 25c, where the modification is the modified modulus 25c greater than, or equal to, the secondary coating modulus 25d, and the surface layer 12 comprises the modified modulus surface layer 12d (see FIG. 1B).

The surface layer 12 with the modified modulus 25c, such as the modified modulus surface layer 12d, creates a stress relief 31 (see FIG. 1B) and an integrated dampening 102 (see FIG. 1B), and an integrated cushioning 104 (see FIG. 1B) between the at least one secondary coating 70 and the plurality of structural ply layers 22 of the composite laminate assembly 16, to provide an increased microcracking resistance 106 (see FIG. 1A) and a minimized structural degradation 108 (see FIG. 1A), as well as an improved thermal moisture cycling performance 110 (see FIG. 1A), for the one or more aircraft composite structures 94a with the modified modulus composite laminate system 10, when the one or more aircraft composite structures 94a with the modified modulus composite laminate system 10 are subjected to one or more of, a thermal exposure 96 (see FIG. 1A), and a moisture exposure 98 (see FIG. 1A), in a thermal moisture cycling 100 (see FIG. 1A), or a thermal moisture cycling event.

In some versions, the modified modulus composite laminate system 10 comprises the surface layer 12 comprising a surfacing film 64 (see FIG. 1B) applied directly to the composite laminate assembly 16, prior to the curing 34, or co-curing 34a, of the composite laminate assembly 16, and the surfacing film 64 is cured or co-cured with the composite laminate assembly 16. In some versions, the surfacing film 64 comprises a resin-based composite surfacing film 64a (see FIG. 1A). The surfacing film 64 may also comprise another suitable type of surfacing film 64. The surfacing film 64 comprises the film layer 65 (see FIG. 1B) impregnated, or infused with, the prepreg thermoset resin 118. The prepreg thermoset resin 118 includes, as shown in FIG. 1B, adhesive 118a, epoxy 118b, phenolic 118c, polyimide 118d, bismaleimide (BMI) 118e, polyurethane 118f, fluoropolymer 118g, cyanate ester 118h, or another suitable prepreg thermoset resin 118. The infused resin 136 may further comprise an ultraviolet light-resistant infused resin, an aliphatic epoxy infused resin, a fire-retardant infused resin, or another suitable infused resin 136.

In some other versions, the modified modulus composite laminate system 10 comprises the surface layer 12 comprising the lightning strike protection material assembly 66 (see FIG. 1B) applied directly to the composite laminate assembly 16, prior to the curing 34, or co-curing 34a, of the composite laminate assembly 16, and the lightning strike protection material assembly 66 is cured or co-cured with the composite laminate assembly 16. In some versions, the lightning strike protection material assembly 66 comprises a lightning strike expanded metal foil layer 122 (see FIG. 1B) comprising a lightning strike expanded metal foil 124 (see FIG. 1B), and a resin infused scrim layer 132 (see FIG. 1B) laminated to the lightning strike expanded metal foil layer 122. The resin infused scrim layer 132 comprises a non-metallic scrim 134 (see FIG. 1B) infused with an infused resin 136 (see FIG. 1B).

The lightning strike expanded metal foil 124 comprises the non-continuous metal foil 126 comprising, as shown in FIG. 1B, one or more of, the perforated metal foil 126a, the expanded metal foil 126b, the metal mesh 126c, the metallized fiber mesh 126d, the metal screen 126e, the metallized fiber weave 126f, the woven metal 126g, the wire mesh 126h, the metal foam 126i, the open cell metal foam 126j, or another suitable non-continuous metal foil 126.

The lightning strike expanded metal foil 124 further comprises the metal material 128 or the metal alloy material 130. The metal material 128 comprises, as shown in FIG. 1B, one or more of, copper 128a, aluminum 128b, titanium 128c, nickel 128d, gold 128e, silver 128f, or another suitable metal material 128. The metal alloy material 130 comprises, as shown in FIG. 1B, one or more of, copper alloy 130a, aluminum (AL) alloy 130b, titanium alloy 130c, nickel alloy 130d, gold alloy 130e, silver alloy 130f, bronze 130g, brass 130h, or another suitable metal alloy material 130.

The non-metallic scrim 134 comprises, as shown in FIG. 1B, one of, the non-metallic scrim mat 134a, the glass fiber scrim mat 134b, the carbon fiber scrim mat 134c, the woven scrim mat 134d, the knit polyester scrim mat 134e, the nonwoven scrim mat 134f, or another suitable non-metallic scrim 134. The non-metallic scrim 134 may further comprise a scrim weave or a carrier with glass fibers 54 (see FIG. 1A) or fiberglass reinforcement, or with carbon fibers 50 (see FIG. 1A) or carbon fiber reinforcement, with nylon fibers or nylon fiber reinforcement, with polyester fibers or polyester fiber reinforcement, or with another suitable fiber reinforcement.

The infused resin 136 comprises a prepreg thermoset resin 118 (see FIG. 1B) like the prepreg thermoset resin 118 of the surfacing film 64, including, as shown in FIG. 1B, adhesive 118a, epoxy 118b, phenolic 118c, polyimide 118d, bismaleimide (BMI) 118e, polyurethane 118f, fluoropolymer 118g, cyanate ester 118h, or another suitable prepreg thermoset resin 118. The infused resin 136 may further comprise an ultraviolet light-resistant infused resin, an aliphatic epoxy infused resin, a fire-retardant infused resin, or another suitable infused resin 136.

In yet other versions, the modified modulus composite laminate system 10 comprises the surface layer 12 comprising one or more resin repair layers 68 applied directly to the composite laminate assembly 16, after the curing 34 of the composite laminate assembly 16. In some versions, the resin repair layer 68, or layers, comprises a resin system 146 with reinforced composite fibers 46a.

Now referring to FIGS. 2A-2E, FIGS. 2A-2E show an exemplary modified modulus composite laminate system 10 (see FIGS. 2C-2E), and an exemplary modified modulus composite laminate assembly 11 (see FIGS. 2A-2B), where the surface layer 12, such as the modified modulus surface layer 12d, is in the form of a surfacing film 64.

Now referring to FIG. 2A, FIG. 2A is an illustration of a front cross-sectional view of the exemplary modified modulus composite laminate assembly 11, comprising the surface layer 12, such as an uncured surface layer 12a, in the form of the surfacing film 64, such as the resin-based composite surfacing film 64a, applied to, and laid up on, a structural assembly 14, such as a composite laminate assembly 16, in the form of an uncured composite laminate assembly 16a, to form the lay-up assembly 86, such as the uncured lay-up assembly 86a.

As shown in FIG. 2A, the surfacing film 64, such as the resin-based composite surfacing film 64a, comprises the film layer 65 impregnated, or infused with, the prepreg thermoset resin 118. As further shown in FIG. 2A, the surfacing film 64, such as the resin-based composite surfacing film 64a, has a first side 150, such as a top side 150a, a second side 152, such as a bottom side 152a, and ends 154. The surface layer 12, such as the surfacing film 64, for example, the resin-based composite surfacing film 64a, has the modified modulus 25c (see FIG. 1B) and is in the form of the modified modulus surface layer 12d.

As shown in FIG. 2A, the structural assembly 14, such as the composite laminate assembly 16, in the form of the uncured composite laminate assembly 16a, comprises the plurality of structural layers 20, such as the plurality of structural ply layers 22, comprised of the plurality of plies 24. Each structural ply layer 22 is preimpregnated with the structural resin 60, such as in the form of the uncured structural resin 60a, for example, a thermoset structural resin 62. FIG. 2A shows the structural assembly 14, such as the composite laminate assembly 16, in the form of a panel 18.

In some versions, as shown in FIG. 2A, the structural assembly 14, such as the composite laminate assembly 16, has four (4) structural layers 20, such as four (4) structural ply layers 22, where each structural ply layer 22 comprises a ply 24, and the plurality of structural ply layers 22 comprise a plurality of plies 24. In some other versions, the structural assembly 14, such as the composite laminate assembly 16, may have less than four (4), or more than four (4), structural layers 20, such as structural ply layers 22.

As further shown in FIG. 2A, the plies 24 include a top ply 24a, a bottom ply 24b, and two (2) intermediate plies 24c stacked between the bottom ply 24b and the top ply 24a. However, the plurality of plies 24 may comprise greater than two (2) intermediate plies 24c. As shown in FIG. 2A, the plies 24 are in the form of structural plies 24d. Each of the top ply 24a, the bottom ply 24b, and the intermediate plies 24c, has a first side 155 (see FIG. 2A), such as a top side 155a (see FIG. 2A), and a second side 156 (see FIG. 2A), such as a bottom side 156a (see FIG. 2A), and ends 157 (see FIG. 2A).

As shown in FIG. 2A, the second side 152, such as the bottom side 152a, of the surface layer 12, such as the surfacing film 64, is laid up on, directly applied to and over, coupled to, and in continuous contact with, the first side 155, such as the top side 155a, of the top ply 24a, of the plurality of structural ply layers 22 of the structural assembly 14, such as the composite laminate assembly 16.

Now referring to FIG. 2B, FIG. 2B is an illustration of a front cross-sectional view of the modified modulus composite laminate assembly 11, of FIG. 2A, during co-curing 34a, in an interior 158 of a heating apparatus 88, such as in an autoclave 90. FIG. 2B shows the lay-up assembly 86, such as the partially cured lay-up assembly 86b, comprising the surface layer 12, such as a partially cured surface layer 12b, in the form of the surfacing film 64, such as the resin-based composite surfacing film 64a, applied to, and laid up on, the structural assembly 14, such as the composite laminate assembly 16, in the form of a partially cured composite laminate assembly 16b. The surface layer 12, such as the surfacing film 64, for example, the resin-based composite surfacing film 64a, has the modified modulus 25c (see FIG. 1B) and is in the form of the modified modulus surface layer 12d (see FIG. 2B). The structural assembly 14, such as the composite laminate assembly 16, is in the form of the panel 18 (see FIG. 2B). FIG. 2B further shows the structural resin 60, such as in the form of the partially cured structural resin 60b.

The lay-up assembly 86, such as the modified modulus composite laminate assembly 11, is co-cured, or cured, at an elevated temperature 38 (see FIG. 1A). As shown in FIG. 2B, the plurality of structural ply layers 22 comprising the different plies 24, such as the top ply 24a, the bottom ply 24b, and the intermediate plies 24c, want to expand and to contract to different sizes relative to each other, due to the anisotropic nature of the material of the plies 24. However, the plies 24 are bonded together, so this expansion 112 (see FIG. 2B) and contraction 114 (see FIG. 2B) is captured as stress 30 (see FIG. 2B). In particular, FIG. 2B shows expansion 112 and stress 30 in an intermediate ply 24c adjacent the bottom ply 24b, and shows contraction 114 and stress 30 in the top ply 24a.

Now referring to FIG. 2C, FIG. 2C is an illustration of a front cross-sectional view of the exemplary modified modulus composite laminate system 10, where the secondary coating 70, such as a paint coating 72, is applied to the lay-up assembly 86, such as the cured lay-up assembly 86c, comprising the modified modulus composite laminate assembly 11, of FIG. 2B, that has been co-cured or cured. As shown in FIG. 2C, the secondary coating 70, such as the paint coating 72, has a first side 160, such as a top side 160a, a second side 162, such as a bottom side 162a, and ends 164.

As shown in FIG. 2C, the second side 162, such as the bottom side 162a, of the secondary coating 70, such as the paint coating 72, is directly applied to and over, coupled to, and in continuous contact with, the first side 150, such as the top side 150a, of the surface layer 12, such as the cured surface layer 12c, in the form of the surfacing film 64, such as the resin-based composite surfacing film 64a. The surface layer 12 comprises an intermediate layer 12e positioned between the secondary coating 70 on top of the surface layer 12, and the structural assembly 14, such as the composite laminate assembly 16, for example, the cured composite laminate assembly 16c. The surface layer 12, such as the surfacing film 64, for example, the resin-based composite surfacing film 64a, has the modified modulus 25c (see FIG. 1B) and is in the form of the modified modulus surface layer 12d (see FIG. 2C). The structural assembly 14, such as the composite laminate assembly 16, is in the form of the panel 18 (see FIG. 2C). FIG. 2C further shows the plurality of structural ply layers 22 comprised of the plurality of plies 24. FIG. 2C further shows the structural resin 60, such as in the form of the cured structural resin 60c.

Now referring to FIG. 2D, FIG. 2D is an illustration of a front cross-sectional view of the modified modulus composite laminate system 10, of FIG. 2C, subjected to a thermal exposure 96, such as heat 36, and a moisture exposure 98, such as moisture 165, for example, rain 165a. As shown in FIG. 2D, the modified modulus composite laminate system 10 includes the secondary coating 70, such as the paint coating 72, applied to the surface layer 12, such as the cured surface layer 12c, in the form of the surfacing film 64, such as the resin-based composite surfacing film 64a. The surface layer 12, such as the surfacing film 64, for example, the resin-based composite surfacing film 64a, has the modified modulus 25c (see FIG. 1B), and is in the form of the modified modulus surface layer 12d. As further shown in FIG. 2D, the modified modulus composite laminate system 10 includes the structural assembly 14, such as the composite laminate assembly 16, for example, the cured composite laminate assembly 16c, with the plurality of structural ply layers 22 comprising the different plies 24, such as the top ply 24a, the bottom ply 24b, and the intermediate plies 24c.

As further shown in FIG. 2D, the structural assembly 14, such as the composite laminate assembly 16, is in the form of the panel 18, and the modified modulus composite laminate system 10 with the panel 18 is subjected to the thermal exposure 96, such as heat 36, and to the moisture exposure 98, such as the moisture 165, causing some of the plurality of structural ply layers 22 comprising plies 24 to experience expansion 112, such as thermal moisture expansion 112a, and causing some of the plurality of structural ply layers 22 comprising plies 24 to experience contraction 114, such as thermal moisture contraction 114a. In addition, the different materials, such as the plies 24, the surface layer 12, such as the modified modulus surface layer 12d, and the secondary coating 70 exhibit different amounts of expansion 112, such as thermal moisture expansion 112a, and different amounts of contraction 114, such as thermal moisture contraction 114a. This is exacerbated by stress 30 (see FIG. 2D). In particular, FIG. 2D shows contraction 114, such as thermal moisture contraction 114a, and stress 30 in the top ply 24a, and shows expansion 112, such as thermal moisture expansion 112a, and stress 30 in an intermediate ply 24c adjacent the bottom ply 24b.

Now referring to FIG. 2E, FIG. 2E is an illustration of a front cross-sectional view of the modified modulus composite laminate system 10, of FIG. 2D, showing microcracking 116, such as surface microcracking 116a, after being subjected to the thermal exposure 96, such as heat 36, and the moisture exposure 98, such as moisture 165, for example, rain 165a, as shown in FIG. 2D. As shown in FIG. 2E, the microcracking 116, such as surface microcracking 116a, extends through the secondary coating 70, such as the paint coating 72, and through the surface layer 12, such as the cured surface layer 12c, in the form of the surfacing film 64, such as the resin-based composite surfacing film 64a. The surface layer 12, such as the surfacing film 64, for example, the resin-based composite surfacing film 64a, has the modified modulus 25c (see FIG. 1B), and is in the form of the modified modulus surface layer 12d.

As further shown in FIG. 2E, the modified modulus composite laminate system 10 has no internal microcracking 116b (see FIG. 1A), and the microcracking 116 does not extend into or through the structural assembly 14, such as the composite laminate assembly 16, in the form of the cured composite laminate assembly 16c, having the plurality of structural ply layers 22 comprising plies 24, that is underneath the surface layer 12 and the secondary coating 70. As shown in FIG. 2E, the structural assembly 14, such as the composite laminate assembly 16, is in the form of the panel 18.

The modified modulus surface layer 12d of FIG. 2E has minimal strain mismatch 32d (see FIG. 1A) between the modified modulus surface layer 12d and the secondary coating 70. The modified modulus surface layer 12d of FIG. 2E also safely absorbs the size change between the modified modulus surface layer 12d and the structural ply layers 22 with the plies 24 below or underneath the modified modulus surface layer 12d, thus resulting in increased microcracking resistance 106 (see FIG. 1A), minimized structural degradation 108 (see FIG. 1A), and improved thermal moisture cycling performance 110 (see FIG. 1A). In contrast, known structural panels or composite laminates with no modified modulus have a large strain mismatch between the structural panels or composite laminates and secondary layers such as paint, thus leading to microcracks or cracks into the structural panels or composite laminates when subjected to thermal moisture exposure.

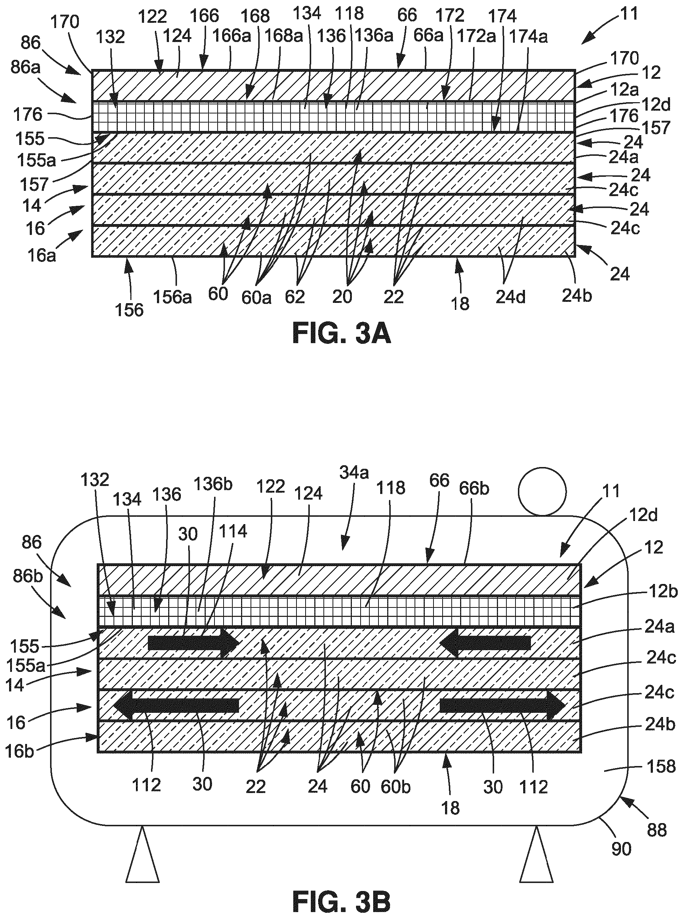

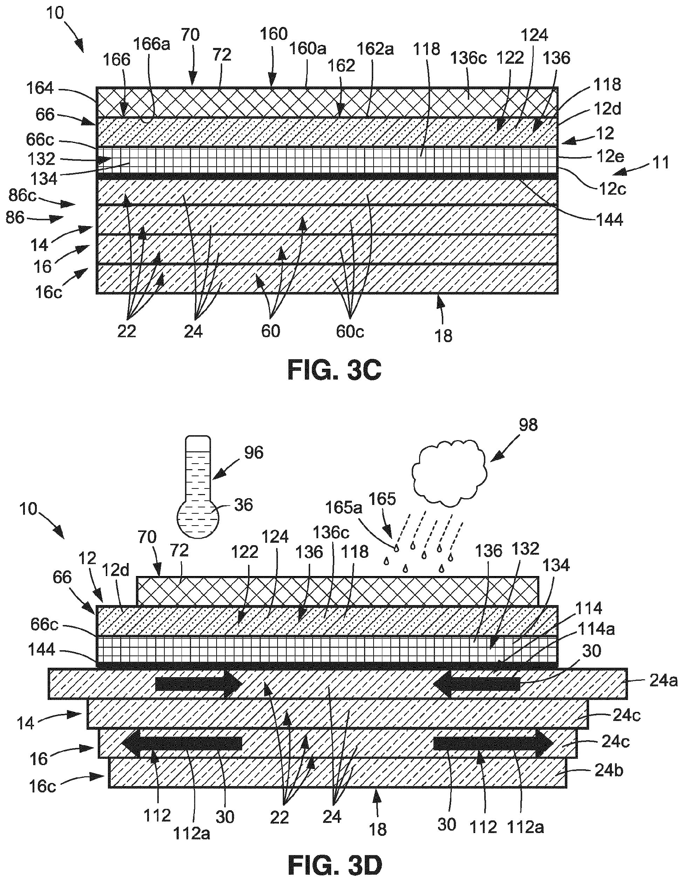

Now referring to FIGS. 3A-3E, FIGS. 3A-3E show an exemplary modified modulus composite laminate system 10 (see FIGS. 3C-3E), and an exemplary modified modulus composite laminate assembly 11 (see FIGS. 3A-3B), where the surface layer 12, such as the modified modulus surface layer 12d, is in the form of a lightning strike protection material assembly 66.

Now referring to FIG. 3A, FIG. 3A is an illustration of a front cross-sectional view of an exemplary modified modulus composite laminate assembly 11, comprising the surface layer 12, such as an uncured surface layer 12a, in the form of lightning strike protection material assembly 66, such as the uncured lightning strike protection material assembly 66a, applied to, and laid up on, the structural assembly 14, such as the composite laminate assembly 16, in the form of the uncured composite laminate assembly 16a, to form the lay-up assembly 86, such as the uncured lay-up assembly 86a.

As shown in FIG. 3A, the lightning strike protection material assembly 66 comprises the lightning strike expanded metal foil layer 122 comprising a lightning strike expanded metal foil 124. As further shown in FIG. 3A, the lightning strike expanded metal foil layer 122 has a first side 166, such as a top side 166a, a second side 168, such as a bottom side 168a, and ends 170. The surface layer 12, such as the lightning strike protection material assembly 66, has the modified modulus 25c (see FIG. 1B) and is in the form of the modified modulus surface layer 12d.

As shown in FIG. 3A, the lightning strike protection material assembly 66 further comprises the resin infused scrim layer 132 laminated to the lightning strike expanded metal foil layer 122. The resin infused scrim layer 132 comprising a non-metallic scrim 134 infused with an infused resin 136, such as a prepreg thermoset resin 118, in the form of an uncured infused resin 136a. As further shown in FIG. 3A, the resin infused scrim layer 132 has a first side 172, such as a top side 172a, a second side 174, such as a bottom side 174a, and ends 176.

As shown in FIG. 3A, the second side 168, such as the bottom side 168a, of the lightning strike expanded metal foil layer 122 is laid up on, directly applied to and over, coupled to, and in continuous contact with, the first side 172, such as the top side 172a, of the resin infused scrim layer 132. As further shown in FIG. 3A, the second side 174, such as the bottom side 174a, of the resin infused scrim layer 132 is laid up on, directly applied to and over, coupled to, and in continuous contact with, the first side 155, such as the top side 155a, of the top ply 24a, of the plurality of structural ply layers 22 of the structural assembly 14, such as the composite laminate assembly 16.

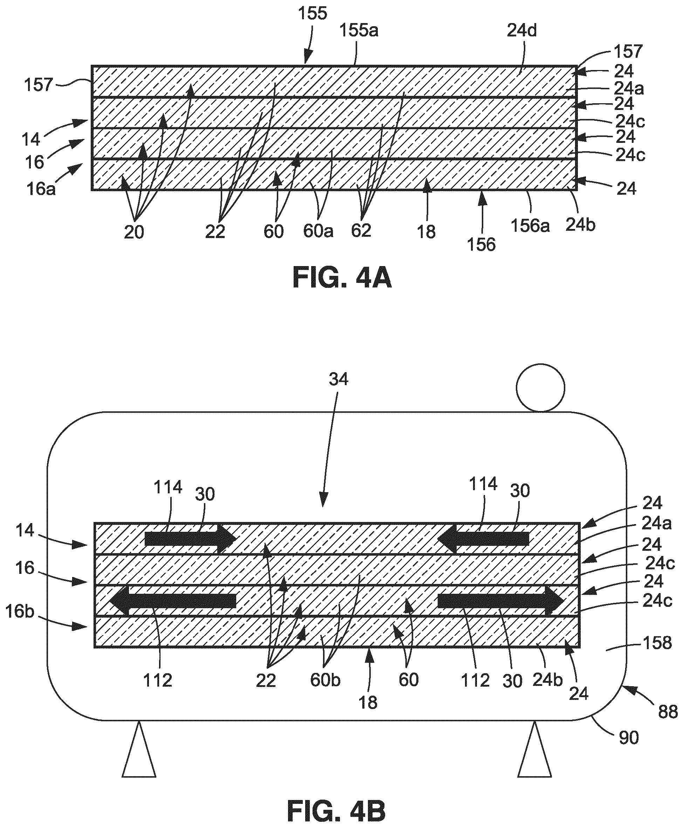

As shown in FIG. 3A, the structural assembly 14, such as the composite laminate assembly 16, in the form of the uncured composite laminate assembly 16a, comprises the plurality of structural layers 20, such as the plurality of structural ply layers 22, comprised of the plurality of plies 24. Each structural ply layer 22 is preimpregnated with the structural resin 60, such as in the form of the uncured structural resin 60a, for example, a thermoset structural resin 62. FIG. 4A shows the structural assembly 14, such as the composite laminate assembly 16, in the form of a panel 18.

In some versions, as shown in FIG. 3A, the structural assembly 14, such as the composite laminate assembly 16, has four (4) structural layers 20, such as four (4) structural ply layers 22, where each structural ply layer 22 comprises a ply 24, and the plurality of structural ply layers 22 comprise a plurality of plies 24. In some other versions, the structural assembly 14, such as the composite laminate assembly 16, may have less than four (4), or more than four (4), structural layers 20, such as structural ply layers 22.

As further shown in FIG. 3A, the plies 24 include the top ply 24a, the bottom ply 24b, and two (2) intermediate plies 24c stacked between the bottom ply 24b and the top ply 24a. However, the plurality of plies 24 may comprise greater than two (2) intermediate plies 24c. As shown in FIG. 4A, the plies 24 are in the form of structural plies 24d. Each of the top ply 24a, the bottom ply 24b, and the intermediate plies 24c, has the first side 155 (see FIG. 4A), such as the top side 155a (see FIG. 4A), and the second side 156 (see FIG. 4A), such as the bottom side 156a (see FIG. 4A), and ends 157 (see FIG. 4A).

Now referring to FIG. 3B, FIG. 3B is an illustration of a front cross-sectional view of the modified modulus composite laminate assembly 11, of FIG. 3A, during co-curing 34a, in the interior 158 of the heating apparatus 88, such as in the autoclave 90. FIG. 3B shows the lay-up assembly 86, such as the partially cured lay-up assembly 86b, comprising the surface layer 12, such as the partially cured surface layer 12b, in the form of the lightning strike protection material assembly 66, such as the partially cured lightning strike protection material assembly 66b. The surface layer 12, such as the lightning strike protection material assembly 66, has the modified modulus 25c (see FIG. 1B) and is in the form of the modified modulus surface layer 12d.

As shown in FIG. 3B, the lightning strike protection material assembly 66 comprises the lightning strike expanded metal foil layer 122 comprising the lightning strike expanded metal foil 124, and the resin infused scrim layer 132 comprising the non-metallic scrim 134 infused with an infused resin 136 such as the prepreg thermoset resin 118, in the form of a partially cured infused resin 136b. FIG. 3B shows the lightning strike protection material assembly 66 applied to, and laid up on, the structural assembly 14, such as the composite laminate assembly 16, in the form of the partially cured composite laminate assembly 16b. In particular, the resin infused scrim layer 132 is laid up on the first side 155 (see FIG. 3B), such as the top side 155a (see FIG. 3B), of the top ply 24a of the composite laminate assembly 16. The structural assembly 14, such as the composite laminate assembly 16, is in the form of the panel 18 (see FIG. 3B). FIG. 3B further shows the structural resin 60, such as in the form of the partially cured structural resin 60b.

The lay-up assembly 86, such as the modified modulus composite laminate assembly 11, is co-cured, or cured, at an elevated temperature 38 (see FIG. 1A). As shown in FIG. 4B, the plurality of structural ply layers 22 comprising the different plies 24, such as the top ply 24a, the bottom ply 24b, and the intermediate plies 24c, want to expand and to contract to different sizes relative to each other, due to the anisotropic nature of the material of the plies 24. However, the plies 24 are bonded together, so this expansion 112 (see FIG. 4B) and contraction 114 (see FIG. 4B) is captured as stress 30 (see FIG. 4B). In particular, FIG. 4B shows expansion 112 and stress 30 in an intermediate ply 24c adjacent the bottom ply 24b, and shows contraction 114 and stress 30 in the top ply 24a.

Now referring to FIG. 3C, FIG. 3C is an illustration of a front cross-sectional view of an exemplary modified modulus composite laminate system 10, where the secondary coating 70, such as the paint coating 72, is applied to the lay-up assembly 86, such as the cured lay-up assembly 86c, comprising the modified modulus composite laminate assembly 11, of FIG. 3B, that has been co-cured or cured. As shown in FIG. 3C, the secondary coating 70, such as the paint coating 72, has the first side 160, such as the top side 160a, the second side 162, such as the bottom side 162a, and ends 164.

As shown in FIG. 3C, the second side 162, such as the bottom side 162a, of the secondary coating 70, such as the paint coating 72, is directly applied to and over, coupled to, and in continuous contact with, the first side 166, such as the top side 166a, of the lightning strike expanded metal foil layer 122 of the lightning strike protection material assembly 66, such as the cured lightning strike protection material assembly 66c. As shown in FIG. 3C, the lightning strike protection material assembly 66 comprises the lightning strike expanded metal foil layer 122 comprising the lightning strike expanded metal foil 124, and the resin infused scrim layer 132 comprising the non-metallic scrim 134 infused with an infused resin 136, such as the prepreg thermoset resin 118, in the form of a cured infused resin 136c.

In some versions, including this version, the surface layer 12, such as the cured surface layer 12c, comprising the lightning strike protection material assembly 66, comprises intermediate layers 12e positioned between the secondary coating 70 on top of the surface layer 12, and the structural assembly 14, such as the composite laminate assembly 16, for example, the cured composite laminate assembly 16c. The surface layer 12, such as the lightning strike protection material assembly 66, has the modified modulus 25c (see FIG. 1B) and is in the form of the modified modulus surface layer 12d (see FIG. 3C). The structural assembly 14, such as the composite laminate assembly 16, is in the form of the panel 18 (see FIG. 3C). FIG. 3C further shows the plurality of structural ply layers 22 comprised of the plurality of plies 24. FIG. 3C further shows the structural resin 60, such as in the form of the cured structural resin 60c.

FIG. 3C further shows the defined resin boundary 144 formed between the resin infused scrim layer 132 of the lightning strike protection material assembly 66, and the top ply 24a of the composite laminate assembly 16. The defined resin boundary 144 helps to prevent or minimize mixing of the infused resin 136 and the structural resin 60 during co-curing 34a or curing 34.

Now referring to FIG. 3D, FIG. 3D is an illustration of a front cross-sectional view of the modified modulus composite laminate system 10, of FIG. 3C, subjected to the thermal exposure 96, such as heat 36, and the moisture exposure 98, such as moisture 165, for example, rain 165a. As shown in FIG. 3D, the modified modulus composite laminate system 10 includes the secondary coating 70, such as the paint coating 72, applied to the surface layer 12, such as the cured surface layer 12c, in the form of the lightning strike protection material assembly 66, such as the cured lightning strike protection material assembly 66c. The surface layer 12, such as the lightning strike protection material assembly 66, has the modified modulus 25c (see FIG. 1B), and is in the form of the modified modulus surface layer 12d (see FIG. 3D).

As shown in FIG. 3D, the lightning strike protection material assembly 66 comprises the lightning strike expanded metal foil layer 122 comprising the lightning strike expanded metal foil 124, and the resin infused scrim layer 132 comprising the non-metallic scrim 134 infused with an infused resin 136, such as the prepreg thermoset resin 118, in the form of the cured infused resin 136c. FIG. 3D further shows the defined resin boundary 144 formed between the resin infused scrim layer 132 of the lightning strike protection material assembly 66, and the top ply 24a of the composite laminate assembly 16.

As further shown in FIG. 3D, the modified modulus composite laminate system 10 includes the structural assembly 14, such as the composite laminate assembly 16, for example, the cured composite laminate assembly 16c, with the plurality of structural ply layers 22 comprising the different plies 24, such as the top ply 24a, the bottom ply 24b, and the intermediate plies 24c.

As further shown in FIG. 3D, the structural assembly 14, such as the composite laminate assembly 16, is in the form of the panel 18, and the modified modulus composite laminate system 10 with the panel 18 is subjected to the thermal exposure 96, such as heat 36, and to the moisture exposure 98, such as the moisture 165, causing some of the plurality of structural ply layers 22 comprising plies 24 to experience expansion 112, such as thermal moisture expansion 112a, and causing some of the plurality of structural ply layers 22 comprising plies 24 to experience contraction 114, such as thermal moisture contraction 114a. In addition, the different materials, such as the plies 24, the surface layer 12, such as the modified modulus surface layer 12d, and the secondary coating 70 exhibit different amounts of expansion 112, such as thermal moisture expansion 112a, and different amounts of contraction 114, such as thermal moisture contraction 114a. This is exacerbated by stress 30 (see FIG. 3D). In particular, FIG. 3D shows contraction 114, such as thermal moisture contraction 114a, and stress 30 in the top ply 24a, and shows expansion 112, such as thermal moisture expansion 112a, and stress 30 in an intermediate ply 24c adjacent the bottom ply 24b.

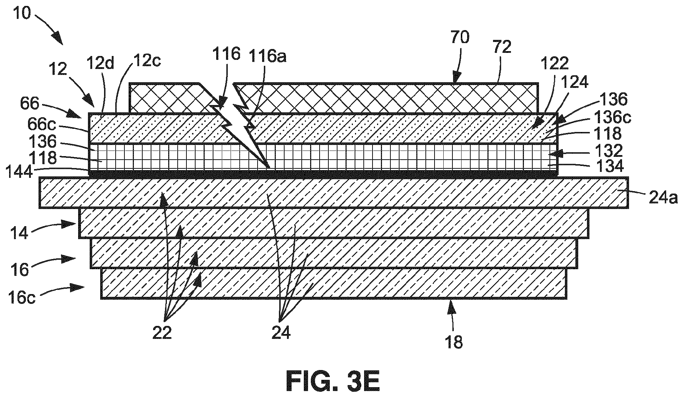

Now referring to FIG. 3E, FIG. 3E is an illustration of a front cross-sectional view of the modified modulus composite laminate system 10, of FIG. 3D, showing microcracking 116, such as surface microcracking 116a, after being subjected to the thermal exposure 96, such as heat 36, and the moisture exposure 98, such as moisture 165, for example, rain 165a, as shown in FIG. 3D. As shown in FIG. 3E, the microcracking 116, such as the surface microcracking 116a, extends through the secondary coating 70, such as the paint coating 72, and through the surface layer 12, such as the cured surface layer 12c, in the form of the lightning strike protection material assembly 66, such as the cured lightning strike protection material assembly 66c. The surface layer 12, such as the lightning strike protection material assembly 66, has the modified modulus 25c (see FIG. 1B), and is in the form of the modified modulus surface layer 12d.

As shown in FIG. 3E, the lightning strike protection material assembly 66 comprises the lightning strike expanded metal foil layer 122 comprising the lightning strike expanded metal foil 124, and the resin infused scrim layer 132 comprising the non-metallic scrim 134 infused with an infused resin 136, such as the prepreg thermoset resin 118, in the form of the cured infused resin 136c. FIG. 3E further shows the defined resin boundary 144 formed between the resin infused scrim layer 132 of the lightning strike protection material assembly 66, and the top ply 24a of the composite laminate assembly 16.

As further shown in FIG. 3E, the modified modulus composite laminate system 10 has no internal microcracking 116b (see FIG. 1A), and the microcracking 116 does not extend into or through the structural assembly 14, such as the composite laminate assembly 16, in the form of the cured composite laminate assembly 16c, having the plurality of structural ply layers 22 comprising plies 24, that is underneath the surface layer 12 and the secondary coating 70. As shown in FIG. 3E, the structural assembly 14, such as the composite laminate assembly 16, is in the form of the panel 18.

The modified modulus surface layer 12d of FIG. 3E has minimal strain mismatch 32d (see FIG. 1A) between the modified modulus surface layer 12d and the secondary coating 70. The modified modulus surface layer 12d of FIG. 3E also safely absorbs the size change between the modified modulus surface layer 12d and the structural ply layers 22 with the plies 24 below or underneath the modified modulus surface layer 12d, thus resulting in increased microcracking resistance 106 (see FIG. 1A), minimized structural degradation 108 (see FIG. 1A), and improved thermal moisture cycling performance 110 (see FIG. 1A).

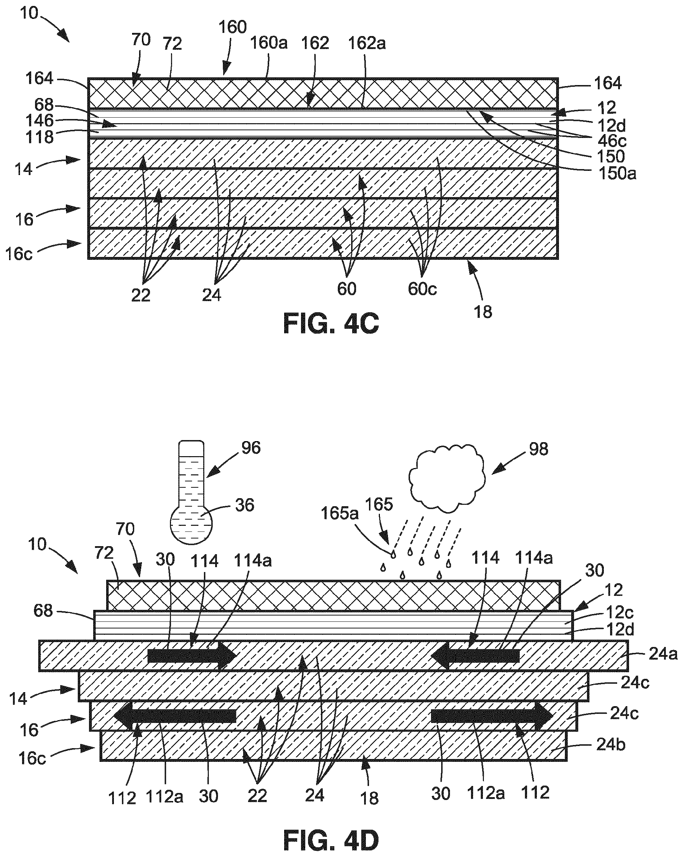

Now referring to FIGS. 4A-4E, FIGS. 4A-4E show an exemplary modified modulus composite laminate system 10 (see FIGS. 4C-4E), and an exemplary structural assembly 14, such as a composite laminate assembly 16, comprising an uncured composite laminate assembly 16a, where the surface layer 12, such as the modified modulus surface layer 12d, is in the form of a resin repair layer 68.

Now referring to FIG. 4A, FIG. 4A is an illustration of a front cross-sectional view of the exemplary structural assembly 14, such as the composite laminate assembly 16, comprising the uncured composite laminate assembly 16a, of the exemplary modified modulus composite laminate system 10 (see FIG. 4C).

As shown in FIG. 4A, the structural assembly 14, such as the composite laminate assembly 16, in the form of the uncured composite laminate assembly 16a, comprises the plurality of structural layers 20, such as the plurality of structural ply layers 22, comprised of the plurality of plies 24. Each structural ply layer 22 is preimpregnated with the structural resin 60, such as in the form of the uncured structural resin 60a, for example, a thermoset structural resin 62. FIG. 4A shows the structural assembly 14, such as the composite laminate assembly 16, in the form of a panel 18.

In some versions, as shown in FIG. 4A, the structural assembly 14, such as the composite laminate assembly 16, has four (4) structural layers 20, such as four (4) structural ply layers 22, where each structural ply layer 22 comprises a ply 24, and the plurality of structural ply layers 22 comprise a plurality of plies 24. In some other versions, the structural assembly 14, such as the composite laminate assembly 16, may have less than four (4), or more than four (4), structural layers 20, such as structural ply layers 22.

As further shown in FIG. 4A, the plies 24 include a top ply 24a, a bottom ply 24b, and two (2) intermediate plies 24c stacked between the bottom ply 24b and the top ply 24a. However, the plurality of plies 24 may comprise greater than two (2) intermediate plies 24c. As shown in FIG. 4A, the plies 24 are in the form of structural plies 24d. As shown in FIG. 4A, each of the top ply 24a, the bottom ply 24b, and the intermediate plies 24c, has the first side 155, such as the top side 155a, and a second side 156, such as a bottom side 156a, and ends 157.

Now referring to FIG. 4B, FIG. 4B is an illustration of a front cross-sectional view of the structural assembly 14 of FIG. 4A, such as the composite laminate assembly 16, in the form of the partially cured composite laminate assembly 16b, of the exemplary modified modulus composite laminate system 10 (see FIG. 4C), where the composite laminate assembly 16 is being cured in the interior 158 of the heating apparatus 88, such as the autoclave 90. FIG. 4B shows the composite laminate assembly 16 comprising the partially cured composite laminate assembly 16b, in the form of the panel 18. FIG. 4B further shows the structural resin 60, such as in the form of the partially cured structural resin 60b.

During curing 34 (see FIG. 4B), the composite laminate assembly 16 is cured at an elevated temperature 38 (see FIG. 1A). As shown in FIG. 4B, the plurality of structural ply layers 22 comprising the different plies 24, such as the top ply 24a, the bottom ply 24b, and the intermediate plies 24c, want to expand and to contract to different sizes relative to each other, due to the anisotropic nature of the material of the plies 24. However, the plies 24 are bonded together, so this expansion 112 (see FIG. 4B) and contraction 114 (see FIG. 4B) is captured as stress 30 (see FIG. 4B). In particular, FIG. 2B shows expansion 112 and stress 30 in an intermediate ply 24c adjacent the bottom ply 24b, and shows contraction 114 and stress 30 in the top ply 24a.

Now referring to FIG. 4C, FIG. 4C is an illustration of a front cross-sectional view of an exemplary modified modulus composite laminate system 10, where the surface layer 12, such as the modified modulus surface layer 12d, in the form of a resin repair layer 68, is applied to the structural assembly 14, such as the composite laminate assembly 16, of FIG. 4B, that has been cured, and is now the cured composite laminate assembly 16c. FIG. 4C further shows the modified modulus composite laminate system 10 having the secondary coating 70, such as the paint coating 72, applied to the surface layer 12.

As shown in FIG. 4C, the secondary coating 70, such as the paint coating 72, has the first side 160, such as a top side 160a, the second side 162, such as the bottom side 162a, and ends 164. As further shown in FIG. 4C, the resin repair layer 68 comprises the resin system 146, such as a prepreg thermoset resin 118, with reinforced composite fibers 46c.

As shown in FIG. 4C, the second side 162, such as the bottom side 162a, of the secondary coating 70, such as the paint coating 72, is directly applied to and over, coupled to, and in continuous contact with, the first side 150, such as the top side 150a, of the surface layer 12, such as the cured surface layer 12c, in the form of the resin repair layer 68. The surface layer 12 comprises an intermediate layer 12e positioned between the secondary coating 70 on top of the surface layer 12, and the structural assembly 14, such as the composite laminate assembly 16, for example, the cured composite laminate assembly 16c. The structural assembly 14, such as the composite laminate assembly 16, is in the form of the panel 18 (see FIG. 2C). FIG. 2C further shows the plurality of structural ply layers 22 comprised of the plurality of plies 24. FIG. 4C further shows the structural resin 60, such as in the form of the cured structural resin 60c.

Now referring to FIG. 4D, FIG. 4D is an illustration of a front cross-sectional view of the modified modulus composite laminate system 10, of FIG. 4C, subjected to the thermal exposure 96, such as heat 36, and the moisture exposure 98, such as moisture 165, for example, rain 165a. As shown in FIG. 4D, the modified modulus composite laminate system 10 includes the secondary coating 70, such as the paint coating 72, applied to the surface layer 12, such as the cured surface layer 12c, in the form of the resin repair layer 68. The surface layer 12, such as the resin repair layer 68, has the modified modulus 25c (see FIG. 1B), and is in the form of the modified modulus surface layer 12d (see FIG. 4D). As further shown in FIG. 4D, the modified modulus composite laminate system 10 includes the structural assembly 14, such as the composite laminate assembly 16, for example, the cured composite laminate assembly 16c, with the plurality of structural ply layers 22 comprising the different plies 24, such as the top ply 24a, the bottom ply 24b, and the intermediate plies 24c.

As further shown in FIG. 4D, the structural assembly 14, such as the composite laminate assembly 16, is in the form of the panel 18, and the modified modulus composite laminate system 10 with the panel 18 is subjected to the thermal exposure 96, such as heat 36, and to the moisture exposure 98, such as the moisture 165, causing some of the plurality of structural ply layers 22 comprising plies 24 to experience expansion 112, such as thermal moisture expansion 112a, and causing some of the plurality of structural ply layers 22 comprising plies 24 to experience contraction 114, such as thermal moisture contraction 114a. In addition, the different materials, including the plies 24, the surface layer 12, such as the modified modulus surface layer 12d, and the secondary coating 70, exhibit different amounts of expansion 112 (see FIG. 4D), such as thermal moisture expansion 112a (see FIG. 4D), and different amounts of contraction 114 (see FIG. 4D), such as thermal moisture contraction 114a (see FIG. 4D). This is exacerbated by stress 30 (see FIG. 4D). In particular, FIG. 4D shows contraction 114, such as thermal moisture contraction 114a, and stress 30 in the top ply 24a, and shows expansion 112, such as thermal moisture expansion 112a, and stress 30 in an intermediate ply 24c adjacent the bottom ply 24b.

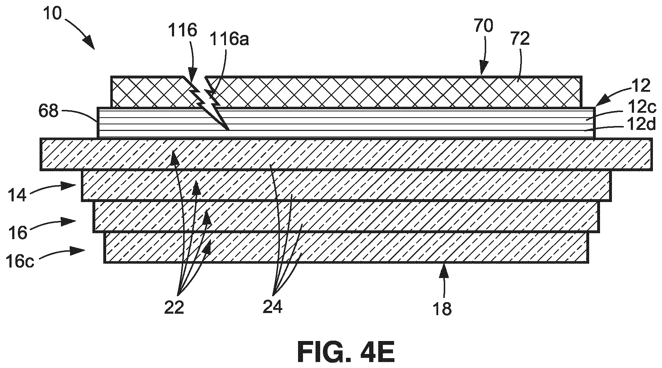

Now referring to FIG. 4E, FIG. 4E is an illustration of a front cross-sectional view of the modified modulus composite laminate system 10, of FIG. 4D, showing microcracking 116, such as surface microcracking 116a, after being subjected to the thermal exposure 96, such as heat 36, and the moisture exposure 98, such as moisture 165, for example, rain 165a, as shown in FIG. 4D. As shown in FIG. 4E, the microcracking 116, such as surface microcracking 116a, extends through the secondary coating 70, such as the paint coating 72, and through the surface layer 12, such as the cured surface layer 12c, in the form of the resin repair layer 68. The surface layer 12, such as the resin repair layer 68, has the modified modulus 25c (see FIG. 1B), and is in the form of the modified modulus surface layer 12d.

As further shown in FIG. 4E, the modified modulus composite laminate system 10 has no internal microcracking 116b (see FIG. 1A), and the microcracking 116 does not extend into or through the structural assembly 14, such as the composite laminate assembly 16, in the form of the cured composite laminate assembly 16c, having the plurality of structural ply layers 22 comprising plies 24, that is underneath the surface layer 12 and the secondary coating 70. As shown in FIG. 4E, the structural assembly 14, such as the composite laminate assembly 16, is in the form of the panel 18.

The modified modulus surface layer 12d of FIG. 4E has minimal strain mismatch 32d (see FIG. 1A) between the modified modulus surface layer 12d and the secondary coating 70. The modified modulus surface layer 12d of FIG. 4E also safely absorbs the size change between the modified modulus surface layer 12d and the structural ply layers 22 with the plies 24 below or underneath the modified modulus surface layer 12d, thus resulting in increased microcracking resistance 106 (see FIG. 1A), minimized structural degradation 108 (see FIG. 1A), and improved thermal moisture cycling performance 110 (see FIG. 1A). In contrast, known structural panels or composite laminates with no modified modulus have a large strain mismatch between the structural panels or composite laminates and secondary layers such as paint, thus leading to microcracks or cracks into the structural panels or composite laminates when subjected to thermal moisture exposure.

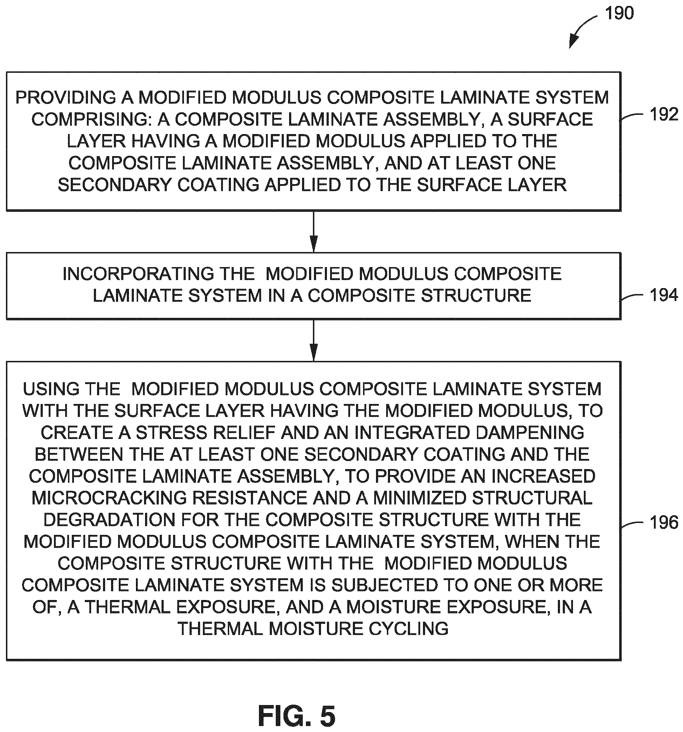

Now referring to FIG. 5, FIG. 5 is an illustration of a flow diagram of an exemplary version of a method 190. In some other versions, there is provided the method 190 of using the modified modulus composite laminate system 10 (see FIG. 1A), discussed in detail above, to provide an increased microcracking resistance 106 (see FIG. 1A) and a minimized structural degradation 108 (see FIG. 1A), as well as an improved thermal moisture cycling performance 110 (see FIG. 1A), for a composite structure 94 (see FIG. 1A), such as an aircraft composite structure 94a (see FIG. 1A). The blocks in FIG. 5 represent operations and/or portions thereof, or elements, and lines connecting the various blocks do not imply any particular order or dependency of the operations or portions thereof, or elements. FIG. 5 and the disclosure of the steps of the method 190 set forth herein should not be interpreted as necessarily determining a sequence in which the steps are to be performed. Rather, although one illustrative order is indicated, it is to be understood that the sequence of the steps may be modified when appropriate. Accordingly, certain operations may be performed in a different order or simultaneously.

As shown in FIG. 5, the method 190 comprises the step 192 of providing the modified modulus composite laminate system 10. As discussed above, the modified modulus composite laminate system 10 comprises the structural assembly 14 (see FIGS. 1A, 2A, 3A, 4A), such as the composite laminate assembly 16 (see FIGS. 1A, 2A, 3A, 4A), that is cured, or is configured to be cured. As shown in FIG. 1A, in some versions, the composite laminate assembly 16 is in the form of a panel 18 (see also FIG. 6), such as a wing panel 18a (see also FIG. 6), a fuselage panel 18b, a horizontal stabilizer panel 18c, a vertical stabilizer panel 18d, or another suitable panel 18. The composite laminate assembly 16 is preferably comprised of a plurality of structural layers 20 (see FIGS. 1A, 2A), such as a plurality of structural ply layers 22 (see FIGS. 1A, 2A), preimpregnated with a structural resin 60 (see FIGS. 1A, 2A). Each structural ply layer 22 has a ply modulus 25a (see FIG. 1A), a ply coefficient of thermal expansion (CTE) 26a (see FIG. 1A), and a ply coefficient of moisture expansion (CME) 28a (see FIG. 1A). The ply modulus 25a, the ply CTE 26a, and the ply CME 28a are the same in each structural ply layer 22. Prior to the curing 34 (see FIG. 1A), or co-curing 34a (see FIG. 1A), the composite laminate assembly 16 comprises an uncured composite laminate assembly (CLA) 16a (see FIG. 1A). During curing 34, or co-curing 34a, the composite laminate assembly 16 comprises a partially cured composite laminate assembly (CLA) 16b (see FIG. 1A). After the curing 34, or co-curing 34a, the composite laminate assembly 16 comprises a cured composite laminate assembly (CLA) 16c (see FIG. 1A).

The plurality of structural ply layers 22 each comprises a composite material 42 (see FIG. 1A) comprising one of, as shown in FIG. 1A, one or more carbon-fiber reinforced polymers (CFRP) 48, or carbon-fiber reinforced plastics, one or more glass-fiber reinforced polymers (GFRP) 52, or glass-fiber reinforced plastics, or one or more aramid polymers 56, or another suitable composite material 42. The composite material 42 comprises composite fibers 46 (see FIG. 1A), such as carbon fibers 50 (see FIG. 1A), glass fibers 54 (see FIG. 1A), aramid fibers 58 (see FIG. 1A), or other suitable composite fibers 46. As shown in FIG. 1A, the structural resin 60 comprises a thermoset structural resin 62, comprising one or more of, an epoxy structural resin 62a, a phenolic structural resin 62b, a polyimide structural resin 62c, a bismaleimide (BMI) structural resin 62d, a polyurethane structural resin 62e, a fluoropolymer structural resin 62f, a cyanate ester structural resin 62g, or another suitable thermoset structural resin 62.

As discussed above, the modified modulus composite laminate system 10 further comprises a surface layer 12 (see FIGS. 1A-1B) applied directly to the structural assembly 14, such as the composite laminate assembly 16, either applied prior to curing 34, or co-curing 34a, the composite laminate assembly 16, or applied after the curing 34, or co-curing 34a, of the composite laminate assembly 16. The surface layer 12 has a surface layer modulus 25b (see FIG. 1B) that is modified to obtain a modified modulus 25c (see FIG. 1B), and the surface layer 12 comprises the modified modulus surface layer 12d (see FIG. 1B). The modified modulus 25c is less than, or equal to, the ply modulus 25a. The surface layer 12 further has a surface layer coefficient of thermal expansion (CTE) 26b (see FIG. 1B) that is different from the ply coefficient of thermal expansion (CTE) 26a.. The surface layer 12 further has a surface layer coefficient of moisture expansion (CME) 28b (see FIG. 1B) that is different from the ply coefficient of moisture expansion (CME) 28a.

As discussed above, the modified modulus composite laminate system 10 further comprises at least one secondary coating 70 (see FIG. 1A) applied directly to the surface layer 12, after the curing 34, or co-curing 34a, of the composite laminate assembly 16 alone or with the surface layer 12. The at least one secondary coating 70 has a secondary coating modulus 25d (see FIG. 1A) that is different from the ply modulus 25a, has a secondary coating coefficient of thermal expansion (CTE) 26c (see FIG. 1A) that is different from the ply coefficient of thermal expansion (CTE) 26a, and has a secondary coating coefficient of moisture expansion (CME) (see FIG. 1A) 28c that is different from the ply coefficient of moisture expansion (CME) 28a. The modified modulus 25c of the surface layer 12, such as the modified modulus surface layer 12d, is modified to be greater than, or equal to, the secondary coating modulus 25d of the at least one secondary coating 70, prior to application of the at least one secondary coating 70 to the surface layer 12, that is, the surface layer modulus 25b of the surface layer 12 is modified to obtain the modified modulus 25c, of the modified modulus surface layer 12d, prior to and before the secondary coating 70 is applied to the surface layer 12, such as the modified modulus surface layer 12d.

The step 192 of providing the modified modulus composite laminate system 10 may further comprise, providing the modified modulus composite laminate system 10, wherein the surface layer 12 comprises a surfacing film 64 (see FIG. 1B) applied directly to the composite laminate assembly 16, prior to the curing 34, or the co-curing 34a, of the composite laminate assembly 16, and the surfacing film 64 is co-cured, or cured, with the composite laminate assembly 16, to form the modified modulus composite laminate assembly 11 (see FIG. 1A). In some versions, the surfacing film 64 comprises a resin-based composite surfacing film 64a (see FIG. 1B).

As shown in FIG. 1B, the surfacing film 64, such as the resin-based composite surfacing film 64a, comprises the prepreg thermoset resin 118 comprising one or more of, adhesive 118a, epoxy 118b, phenolic 118c, polyimide 118d, bismaleimide (BMI) 118e, polyurethane 118f, fluoropolymer 118g, cyanate ester 118h, or another suitable prepreg thermoset resin 118. The prepreg thermoset resin 118 may further comprise an ultraviolet light-resistant prepreg thermoset resin, an aliphatic epoxy prepreg thermoset resin, a fire-retardant prepreg thermoset resin, or another suitable prepreg thermoset resin 118.

The step 192 of providing the modified modulus composite laminate system 10 may further comprise, providing the modified modulus composite laminate system 10, wherein the surface layer 12 comprises one or more resin repair layers 68 (see FIG. 1B) applied directly to the composite laminate assembly 16, after the curing 34 of the composite laminate assembly 16. In some versions, the resin repair layer 68, or layers, comprises a resin system 146 (see FIG. 1B) with reinforced composite fibers 46a (see FIG. 1B). The resin system 146 preferably comprises the prepreg thermoset resin 118, like the surfacing film 64, where the prepreg thermoset resin 118 comprises, as shown in FIG. 1B, one or more of, adhesive 118a, epoxy 118b, phenolic 118c, polyimide 118d, bismaleimide (BMI) 118e, polyurethane 118f, fluoropolymer 118g, cyanate ester 118h, or another suitable prepreg thermoset resin 118. The prepreg thermoset resin 118 may further comprise an ultraviolet light-resistant prepreg thermoset resin, an aliphatic epoxy prepreg thermoset resin, a fire-retardant prepreg thermoset resin, or another suitable prepreg thermoset resin 118.

The step 192 of providing the modified modulus composite laminate system 10 may further comprise, providing the modified modulus composite laminate system 10, wherein the surface layer 12 comprises a lightning strike protection material assembly 66 (see FIG. 1B) applied directly to the composite laminate assembly 16, prior to the curing 34, or the co-curing 34a, of the composite laminate assembly 16, and the lightning strike protection material assembly 66 is co-cured with the composite laminate assembly 16. In some versions, the lightning strike protection material assembly 66 comprises a lightning strike expanded metal foil layer 122 (see FIG. 1B) comprising a lightning strike expanded metal foil 124 (see FIG. 1B), and a resin infused scrim layer 132 (see FIG. 1B) laminated to the lightning strike expanded metal foil layer 122. The resin infused scrim layer 132 comprising a non-metallic scrim 134 (see FIG. 1B) infused with an infused resin 136 (see FIG. 1B). As shown in FIG. 1B, the non-metallic scrim 134 comprises one of, non-metallic scrim mat (SM) 134a, glass fiber scrim mat (SM) 134b, carbon fiber scrim mat (SM) 134c, woven scrim mat (SM) 134d, knit polyester scrim mat (SM) 134e, nonwoven scrim mat (SM) 134f, or another suitable non-metallic scrim 134. The non-metallic scrim 134 may further comprise a scrim weave or a carrier with glass fibers 54 (see FIG. 1A) or fiberglass reinforcement, or with carbon fibers 50 (see FIG. 1A) or carbon fiber reinforcement, with nylon fibers or nylon fiber reinforcement, with polyester fibers or polyester fiber reinforcement, or with another suitable fiber reinforcement.

The step 192 of providing the modified modulus composite laminate system 10 may further comprise, providing the modified modulus composite laminate system 10, wherein the at least one secondary coating 70 comprises one or more of, as showing FIG. 1A, a paint coating 72, a basecoat paint coating 72a, a topcoat paint coating 72b, a primer coating 74, an applique 76, a decal 78, a repair paste coating 80, or another suitable secondary coating 70.

The step 192 of providing the modified modulus composite laminate system 10 may further comprise, providing the modified modulus composite laminate system 10, wherein the surface layer 12 is applied directly to the composite laminate assembly 16, prior to the curing 34, or the co-curing 34a, of the composite laminate assembly 16, and the surface layer 12 and the composite laminate assembly 16 are co-cured, via co-curing 34a (see FIG. 1A) in an autoclave 90 (see FIGS. 1A, 2B) with heat 36 (see FIG. 1A), to obtain a modified modulus composite laminate assembly 11 (see FIG. 1A) that is cured, and prior to application of the at least one secondary coating 70.

In some versions, including this version, the surface layer 12 and the composite laminate assembly 16 undergo a snap cure process 35 (see FIG. 1A), such as disclosed in U.S. Patent Number 11,752,708 B2, which is hereby incorporated by reference in its entirety. The snap cure process 35 may further comprise initially heating the uncured composite laminate assembly 16a (see FIGS. 1A, 2A) to an initial temperature 38a (see FIG. 1A), to generate a partially cured composite laminate assembly 16b (see FIG. 1A), wherein the initially heating is sufficient to gel the prepreg thermoset resin 118 (see FIG. 1B) of the surfacing film 64 or the infused resin 136 of the lightning strike expanded metal foil layer 122, which is uncured, but is insufficient to gel the structural resin 60 (see FIG. 1A), which is uncured. The snap cure process 35 may further comprise subsequently heating the partially cured composite laminate assembly 16b to a final temperature 38c (see FIG. 1A), which is greater than the initial temperature 38a (see FIG. 1A), to generate the modified modulus composite laminate assembly 11 (see FIG. 1A) that is cured, wherein a combination of the initially heating and the subsequently heating is sufficient to fully cure both the prepreg thermoset resin 118 of the surfacing film 64 or the infused resin 136 of the lightning strike expanded metal foil layer 122, and the structural resin 60. The snap cure process 35 may further comprise applying a pressure 92 (see FIG. 1A), such as an elevated atmospheric pressure 92a (see FIG. 1A), to at least one of, the uncured composite laminate assembly 16a and during the initially heating, of the partially cured composite laminate assembly 16b, and during the subsequently heating.

As discussed above, the lightning strike protection material assembly 66 further comprises, as shown in FIG. 1B, a metal material 128 comprising one or more of, copper 128a, aluminum 128b, titanium 128c, nickel 128d, gold 128e, silver 128f, or another suitable metal material 128, or further comprises, as shown in FIG. 1B, a metal alloy material 130 comprising one or more of, copper alloy 130a, aluminum alloy 130b, titanium alloy 130c, nickel alloy 130d, gold alloy 130e, silver alloy 130f, bronze 130g, brass 130h, or another suitable metal alloy material.

As discussed in detail above, the lightning strike protection material assembly 66 further comprises a resin infused scrim layer 132 (see FIGS. 1B, 3A) laminated to the lightning strike expanded metal foil layer 122. The resin infused scrim layer 132 comprises a non-metallic scrim 134 (see FIG. 1B) infused with the infused resin 136 (see FIG. 1B). The infused resin 136 has a viscosity, such as a tailored viscosity, has a cure profile, such as a tailored cure profile, and has a rheology, such as a tailored rheology. The infused resin 136 comprises, as shown in FIG. 1B, a prepreg thermoset resin 118, like the surfacing film 64, comprising one or more of, adhesive 118a, epoxy 118b, phenolic 118c, polyimide 118d, bismaleimide (BMI) 118e, polyurethane 118f, fluoropolymer 118g, cyanate ester 118h, or another suitable prepreg thermoset resin 118.

As shown in FIG. 5, the method 190 further comprises the step 194 of incorporating the modified modulus composite laminate system 10 in the composite structure 94 (see FIG. 1A), such as the aircraft composite structure 94a (see FIG. 1A). The composite structure 94, such as the aircraft composite structure 94a, may comprise one of, a fuselage 202 (see FIG. 6) of an aircraft 200a (see FIG. 6), a wing 204 (see FIG. 6) of the aircraft 200a, a horizontal stabilizer 212 (see FIG. 6) of the aircraft 200a, or another suitable composite structure 94, such as another suitable aircraft composite structure 94a.

As shown in FIG. 5, the method 190 further comprises the step 196 of using the modified modulus composite laminate system 10 having the surface layer 12 with the modified modulus 25c, such as the modified modulus surface layer 12d (see FIG. 1B), to create a stress relief 31 (see FIG. 1B), such as a layered stress relief 31a (see FIG. 1B), and an integrated dampening 102 (see FIG. 1B) and an integrated cushioning 104 (see FIG. 1B) between the at least one secondary coating 70 and the plurality of structural ply layers 22 of the composite laminate assembly 16, to provide the increased microcracking resistance 106 (see FIG. 1A) and the minimized structural degradation 108 (see FIG. 1A), as well as the improved thermal moisture cycling performance 110 (see FIG. 1A), for the composite structure 94 with the modified modulus composite laminate system 10, when the composite structure 94 with the modified modulus composite laminate system 10 is subjected to one or more of, a thermal exposure 96 (see FIG. 1A), and a moisture exposure 98 (see FIG. 1A), in a thermal moisture cycling 100 (see FIG. 1A), or thermal moisture cycling event.

In some versions, where the surface layer 12 and the composite laminate assembly 16 are co-cured together to form the modified modulus composite laminate assembly 11 (see FIG. 1A), prior to application of the at least one secondary coating 70, the method 190 may comprise the steps of, providing a structural assembly 14, such as a composite laminate assembly 16, that is uncured, such as the uncured composite laminate assembly 16a (see FIGS. 1A, 2A), and comprised of the plurality of structural ply layers 22 preimpregnated with the structural resin 60, where each structural ply layer 22 has the same ply modulus 25a, the same ply coefficient of thermal expansion (CTE) 26a, and the same ply coefficient of moisture expansion (CME) 28a; providing the surface layer 12 having, the surface layer modulus 25b that is modified to obtain the modified modulus 25c, the surface layer coefficient of thermal expansion (CTE) 26b that is different from the ply coefficient of thermal expansion (CTE) 26a, and the surface layer coefficient of moisture expansion (CME) 28b that is different from the ply coefficient of moisture expansion (CME) 28a; and providing the at least one secondary coating 70 having, the secondary coating modulus 25d that is different from the ply modulus 25a, the secondary coating coefficient of thermal expansion (CTE) 26c that is different from the ply coefficient of thermal expansion (CTE) 26a, and the secondary coating coefficient of moisture expansion (CME) 28c that is different from the ply coefficient of moisture expansion (CME) 28a.

In some versions, including this version, where the surface layer 12 and the composite laminate assembly 16 are co-cured together to form the modified modulus composite laminate assembly 11 (see FIG. 1A), prior to application of the at least one secondary coating 70, the method 190 comprises the step of, modifying the surface layer modulus 25b of the surface layer 12 to be greater than, or equal to, the secondary coating modulus 25d of the at least one secondary coating 70, to obtain a modified modulus 25c (see FIG. 1B). In some versions, including this version, the method 190 may further comprise the step of, laying up 82 (see FIG. 1A) the surface layer 12 having the modified modulus 25c, such as the modified modulus surface layer 12d (see FIG. 1B), on the uncured composite laminate assembly 16a (see FIG. 1A). Alternatively, the uncured composite laminate assembly 16a may be laid up on the surface layer 12 having the modified modulus 25c, such as the modified modulus surface layer 12d.

In some versions, including this version, the method 190 may further comprise the step of, curing 34, or co-curing 34a (see FIG. 1A), in a heating apparatus 88 (see FIGS. 1A, 2B), such as in an autoclave 90 (see FIGS. 1A, 2B) with heat 36 (see FIG. 1A), the surface layer 12 having the modified modulus 25c, laid up on the uncured composite laminate assembly 16a.

In some versions, including this version, the method 190 may further comprise the step of, applying, after the curing 34, or co-curing 34a, the at least one secondary coating 70 to the surface layer 12, to obtain the modified modulus composite laminate system 10.

In some versions, including this version, the method 190 may further comprise the step of, incorporating the modified modulus composite laminate system 10 in a composite structure 94, such as an aircraft composite structure 94a. The composite structure 94, such as the aircraft composite structure 94a, may comprise one of, a fuselage 202 (see FIG. 6) of an aircraft 200a (see FIG. 6), a wing 204 (see FIG. 6) of the aircraft 200a, a horizontal stabilizer 212 (see FIG. 6) of the aircraft 200a, or another suitable composite structure 94, such as another suitable aircraft composite structure 94a.

In some versions, including this version, the method 190 may further comprise the step of, using the modified modulus composite laminate system 10 having the surface layer 12 with the modified modulus 25c, to create the stress relief 31 (see FIG. 1B) and the integrated dampening 102 (see FIG. 1B) and the integrated cushioning 104 (see FIG. 1B) between the at least one secondary coating 70 and the plurality of structural ply layers 22 of the composite laminate assembly 16, to provide the increased microcracking resistance 106 (see FIG. 1A) and the minimized structural degradation 108 (see FIG. 1A), as well as the improved thermal moisture cycling performance 110 (see FIG. 1A), for the composite structure 94 with the modified modulus composite laminate system 10, when the composite structure 94 with the modified modulus composite laminate system 10 is subjected to one or more of, the thermal exposure 96 (see FIG. 1A), and/or the moisture exposure 98 (see FIG. 1A), in a thermal moisture cycling 100 (see FIG. 1A), or a thermal moisture cycling event.

Now referring to FIG. 6, FIG. 6 is an illustration of a perspective view of a vehicle 200, such as an aircraft 200a, having one or more composite structures 94, such as one or more aircraft composite structures 94a, that incorporate an exemplary modified modulus composite laminate system 10 (see also FIGS. 1A, 2C, 3C, 4C). As shown in FIG. 6, the vehicle 200, such as the aircraft 200a, comprises the fuselage 202, wings 204, engines 206, and the tail 208. As shown in FIG. 6, the tail 208 comprises a vertical stabilizer 210 and horizontal stabilizers 212.

The modified modulus composite laminate system 10 (see FIG. 6) has the composite laminate assembly 16 (see FIG. 1A), such as the cured composite laminate assembly 16c (see FIG. 1A), in the form of a panel 18 (see FIG. 6), such as a wing panel 18a (see FIG. 6), of the composite structure 94, such as the aircraft composite structure 94a, for example, the wing 204 (see FIG. 6), of the aircraft 200a (see FIG. 6). The composite laminate assembly 16, such as the cured composite laminate assembly 16c (see FIG. 1A), of the modified modulus composite laminate system 10 may further comprise a panel 18 (see FIG. 1A), such as a fuselage panel 18b (see FIG. 1A) of the fuselage 202, a horizontal stabilizer panel 18c (see FIG. 1A) of one of the horizontal stabilizers 212, or another suitable panel 18 or structure that is part of, or that comprises, a composite structure 94, such as an aircraft composite structure 94a.

The composite structures 94, such as the aircraft composite structures 94a, are preferably made of composite material 42 (see FIG. 1A), such as carbon-fiber reinforced polymers (CFRP) 48 (see FIG. 1A) or carbon-fiber reinforced plastics, glass-fiber reinforced polymers (GFRP) 52 (see FIG. 1A), or glass-fiber reinforced plastics, or aramid polymers 56 (see FIG. 1A), or another type of composite material 42. The modified modulus composite laminate system 10 having the surface layer 12 with the modified modulus 25c, can be incorporated into composite structures 94, such as aircraft composite structures 94a, having aerosurfaces, such as the wings 204, the fuselage 202, the horizontal stabilizers 212, or other aerosurface areas of the aircraft 200a, to provide increased microcracking resistance 106 (see FIG. 1A), minimized structural degradation 108 (see FIG. 1A), and improved thermal moisture cycling performance 110 (see FIG. 1A).

Although the aircraft 200a shown in FIG. 6 is generally representative of a commercial passenger aircraft having one or more aircraft composite structures 94a, the teachings of the disclosed versions of the modified modulus composite laminate system 10 (see FIG. 1A) and the method 190 (see FIG. 5) may be applied to aircraft composite structures 94a for other passenger aircraft. Moreover, the teachings of the disclosed versions of the modified modulus composite laminate system 10 (see FIG. 1A) and the method 190 (see FIG. 5) may be applied to aircraft composite structures 94a for cargo aircraft, military aircraft, rotorcraft, and other types of aircraft or aerial vehicles, as well as aerospace vehicles, spacecraft, satellites, space launch vehicles, rockets, and other aerospace vehicles. Further, the teachings of the disclosed versions of the modified modulus composite laminate system 10 (see FIG. 1A) and the method 190 (see FIG. 5) may be applied to composite structures 94, such as watercraft, automobiles, trains, architectural structures, or other suitable vehicles or structures.

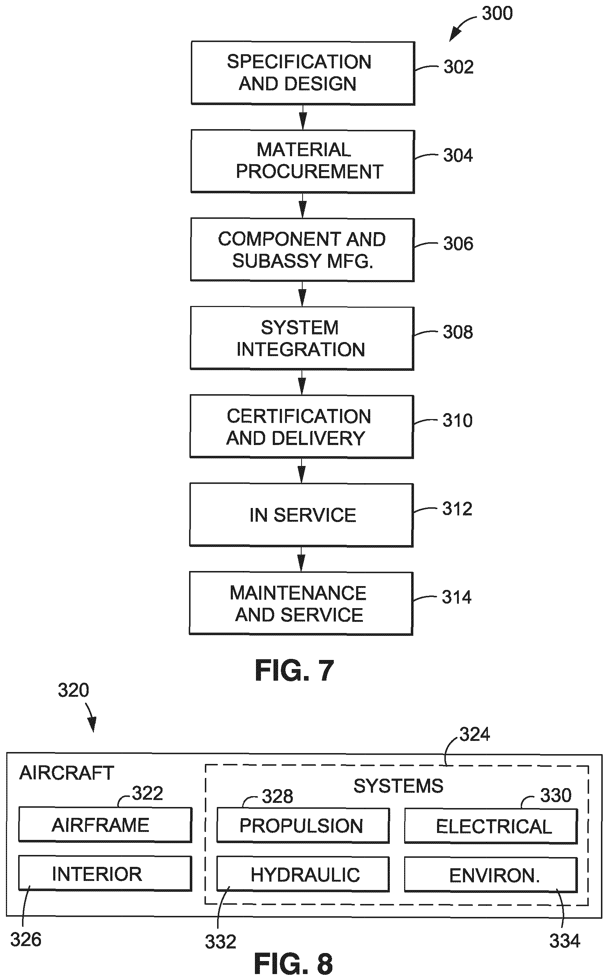

Now referring to FIGS. 7 and 8, FIG. 7 is an illustration of a flow diagram of an exemplary aircraft manufacturing and service method 300, and FIG. 8 is an illustration of an exemplary block diagram of an aircraft 316. Referring to FIGS. 7 and 8, versions of the disclosure may be described in the context of the aircraft manufacturing and service method 300 as shown in FIG. 7, and the aircraft 316 as shown in FIG. 8.

During pre-production, exemplary aircraft manufacturing and service method 300 may include specification and design 302 of the aircraft 316 and material procurement 304. During manufacturing, component and subassembly manufacturing 306 and system integration 308 of the aircraft 316 takes place. Thereafter, the aircraft 316 may go through certification and delivery 310 in order to be placed in service 312. While in service 312 by a customer, the aircraft 316 may be scheduled for routine maintenance and service 314 (which may also include modification, reconfiguration, refurbishment, and other suitable services).

Each of the processes of the aircraft manufacturing and service method 300 may be performed or carried out by a system integrator, a third party, and/or an operator (e.g., a customer). For the purposes of this description, a system integrator may include, without limitation, any number of aircraft manufacturers and major-system subcontractors. A third party may include, without limitation, any number of vendors, subcontractors, and suppliers. An operator may include an airline, leasing company, military entity, service organization, and other suitable operators.

As shown in FIG. 8, the aircraft 316 produced by the exemplary aircraft manufacturing and service method 300 may include an airframe 318 with a plurality of systems 320 and an interior 322. Examples of the plurality of systems 320 may include one or more of a propulsion system 324, an electrical system 326, a hydraulic system 328, and an environmental system 330. Any number of other systems may be included. Although an aerospace example is shown, the principles of the disclosure may be applied to other industries, such as automotive.

Methods and systems embodied herein may be employed during any one or more of the stages of the aircraft manufacturing and service method 300. For example, components or subassemblies corresponding to component and subassembly manufacturing 306 may be fabricated or manufactured in a manner similar to components or subassemblies produced while the aircraft 316 is in service 312. Also, one or more apparatus examples, method examples, or a combination thereof, may be utilized during component and subassembly manufacturing 306 and system integration 308, for example, by substantially expediting assembly of or reducing the cost of the aircraft 316. Similarly, one or more of apparatus examples, method examples, or a combination thereof, may be utilized while the aircraft 316 is in service 312, for example and without limitation, to maintenance and service 314.

Disclosed versions of the modified modulus composite laminate system 10 (see FIG. 1A) and the method 190 (see FIG. 5) provide a system and method to reduce microcracking 116 (see FIGS. 1A, 2E, 3E, 4E) of the surface layer 12 (see FIGS. 1A-1B) and of secondary coatings 70 (see FIG. 1A) during thermal moisture cycling 100 (see FIG. 1A), and to provide an increased microcracking resistance 106 (see FIG. 1A) and a minimized structural degradation 108 (see FIG. 1A), as well as an improved thermal moisture cycling performance 110 (see FIG. 1A), for the modified modulus composite laminate system 10, and the composite structure 94, such as the aircraft composite structure 94a, with the modified modulus composite laminate system 10. Disclosed versions of the modified modulus composite laminate system 10 (see FIG. 1A) and the method 190 (see FIG. 5) comprise modifying or adjusting the modulus 25 (see FIG. 1A) of the surface layer 12 (see FIGS. 1A-1B) on top of the structural assembly 14, such as the composite laminate assembly 16 (see FIG. 1A), so that the modified modulus 25c (see FIG. 1B), is modified to be greater than, or equal to, the secondary coating modulus 25d (see FIG. 1A). The modified modulus 25c, or adjusted modulus, of the surface layer 12 allows the different rates of expansion 112 (see FIG. 1A) and contraction 114 (see FIG. 1A) between the structural ply layers 22 of the composite laminate assembly 16, and the secondary coating 70 to occur without causing non-elastic deformation. The system and method include evaluation, selection, design, and processing of each separate material layer through the thickness of a material, to create stress relief 31 (see FIG. 1B) between layers due to thermally induced strains created during curing 34 (see FIG. 1A), or co-curing 34a (see FIG. 1A). Further, the tailored approach to the modified modulus 25c of the various layers, including the surface layer 12, and lower temperature applied secondary coating 70 materials, increases the effectiveness of the overall system design to minimize surface microcracking 116a (see FIG. 1A) and internal microcracking 116b (see FIG. 1A), improving thermal moisture cycling performance in-service. The thermal exposure 96 (see FIG. 1A) and the moisture exposure 98 (see FIG. 1A) creates differential strains 32 (see FIG. 1A) in the composite laminate assembly 16 with the plurality of structural ply layers 22, and the secondary coating 70. By modifying the surface layer modulus 25b of the surface layer 12 during design of the composite laminate assembly 16 and careful selection of the secondary coating 70 with consideration of these properties, the effect of the differing strains 32 can be safely absorbed, meaning reduced, or no surface microcracking 116a or internal microcracking 116b. The modified modulus composite laminate system 10 creates stress relief 31 through the thickness of the modified modulus composite laminate system 10 by material design and modulus modification of the composite layers through the composite thickness to improve thermal moisture cycling performance, as measured by surface microcracking 116a and surface microcracks and internal microcracking 116b, such as internal microcracks in the structural assembly 14, for example, the composite laminate assembly 16 (see FIG. 1A), while maintaining equivalent or near-equivalent levels of paint adhesion.

In addition, disclosed versions of the modified modulus composite laminate system 10 (see FIG. 1A) and the method 190 (see FIG. 5) allow for product environmental protection with secondary coatings 70 and provide minimized structural degradation 108 (see FIG. 1A) due to internal microcracking 116b, and such minimized structural degradation 108 avoids in-service repair needs and expense. Disclosed versions of the modified modulus composite laminate system 10 (see FIG. 1A) and the method 190 (see FIG. 5) further minimize premature product age damage caused by in-service thermal moisture cycling 100 (see FIG. 1A), and may lengthen the period between paint maintenance or other secondary coating maintenance for products in service. The modified modulus surface layer 12d (see FIG. 1B) has minimal strain mismatch 32d (see FIG. 1A) between the modified modulus surface layer 12d and the secondary coating 70. The modified modulus surface layer 12d also safely absorbs the size change between the modified modulus surface layer 12d and the structural ply layers 22 with the plies 24 below or underneath the modified modulus surface layer 12d, thus resulting in increased microcracking resistance 106 (see FIG. 1A), minimized structural degradation 108 (see FIG. 1A), and improved thermal moisture cycling performance 110 (see FIG. 1A). In contrast, known structural panels or composite laminates with no modified modulus have a large strain mismatch between the structural panels or composite laminates and secondary layers such as paint, thus leading to microcracks or cracks into the structural panels or composite laminates when subjected to thermal moisture exposure.

Moreover, disclosed versions of the modified modulus composite laminate system 10 (see FIG. 1A) and the method 190 (see FIG. 5) mitigate, minimize, and/or prevent microcracking 116 and microcracks and have increased microcracking resistance 106 (see FIG. 1A), and provides minimized structural degradation 108 (see FIG. 1A), to prevent degradation into the underlying composite laminate assembly 16, such as the cured composite laminate assembly 16c (see FIG. 1A). This avoids costly repair or rework. Further, disclosed versions of the modified modulus composite laminate system 10 (see FIG. 1A) and the method 190 (see FIG. 5) modify the surface layer modulus 25b of the surface layer 12 on the composite laminate assembly 16 to be greater than, or equal to, the secondary coating modulus 25d of the secondary coating 70 applied to the surface layer 12, to avoid strain mismatch, to minimize or prevent surface microcracking 116a or cracking in the secondary coating 70, thus avoiding repair or rework, to minimize or prevent internal microcracking 116b or cracking in the underlying composite laminate assembly 16, thus avoiding repair or rework, to minimize structural degradation due to microcracking 116 or cracking, to improve thermal moisture cycling performance in-service, and to allow for different rates of expansion 112 and contraction 114 between the structural ply layers 22 of the composite laminate assembly 16 and the secondary coating 70 to occur, and to provide advantages over known composite structure material systems and methods. In addition, disclosed versions of the modified modulus composite laminate system 10 (see FIG. 1A) and the method 190 (see FIG. 5) allow for various versions of the surface layer 12 or layers, including in one version, a surfacing film 64 (see FIGS. 2A-2E), in another version, the lightning strike protection material assembly 66 (see FIGS. 3A-3E), and in yet another version, the one or more resin repair layers 68 (see FIGS. 4A-4E).

Many modifications and other versions of the disclosure will come to mind to one skilled in the art to which this disclosure pertains having the benefit of the teachings presented in the foregoing descriptions and the associated drawings. The versions described herein are meant to be illustrative and are not intended to be limiting or exhaustive. Although specific terms are employed herein, they are used in a generic and descriptive sense only and not for purposes of limitation. Functionally equivalent methods and apparatuses within the scope of the disclosure, in addition to those enumerated herein, are possible from the foregoing descriptions. The present disclosure is to be limited only by the terms of the appended claims.

The following clauses present further examples:
Clause 1. A modified modulus composite laminate system (10) comprising:
   a composite laminate assembly (16) that is cured and comprised of a plurality of structural ply layers (22) preimpregnated with a structural resin (60), each structural ply layer (22) having a ply modulus (25a), a ply coefficient of thermal expansion (26a), and a ply coefficient of moisture expansion (28a) that are the same in each structural ply layer (22);
   a surface layer (12) applied directly to the composite laminate assembly (16), either applied prior to curing (34) the composite laminate assembly (16), or applied after the curing (34) of the composite laminate assembly (16), the surface layer (12) applied prior to the curing, or applied after the curing, having, a modified modulus (25c) that is less than, or equal to, the ply modulus (25a), a surface layer coefficient of thermal expansion (26b) that is different from the ply coefficient of thermal expansion (26a), and a surface layer coefficient of moisture expansion (28b) that is different from the ply coefficient of moisture expansion (28a); and
   at least one secondary coating (70) applied directly to the surface layer (12), after the curing (34) of the composite laminate assembly (16), the at least one secondary coating (70) having, a secondary coating modulus (25d) that is different from the ply modulus (25a), a secondary coating coefficient of thermal expansion (26c) that is different from the ply coefficient of thermal expansion (26a), and a secondary coating coefficient of moisture expansion (28c) that is different from the ply coefficient of moisture expansion (28a),
   wherein the modified modulus (25c) of the surface layer (12) is modified to be greater than, or equal to, the secondary coating modulus (25d) of the at least one secondary coating (70), prior to application of the at least one secondary coating (70) to the surface layer (12), and
   further wherein the surface layer (12) with the modified modulus (25c) creates a stress relief (31) and an integrated dampening (102) between the at least one secondary coating (70) and the plurality of structural ply layers (22) of the composite laminate assembly (16), to provide an increased microcracking resistance (106) and a minimized structural degradation (108) of the modified modulus composite laminate system (10), when the modified modulus composite laminate system (10) is subjected to one or more of, a thermal exposure (96), and a moisture exposure (98), in a thermal moisture cycling (100).
Clause 2.The modified modulus composite laminate system (10) of Clause 1, wherein the plurality of structural ply layers (22) each comprises a composite material (42) comprising one of, one or more carbon-fiber reinforced polymers (48), one or more glass-fiber reinforced polymers (52), or one or more aramid polymers (56).
Clause 3.The modified modulus composite laminate system (10) of Clause 1 or Clause 2, wherein the surface layer (12) comprises a surfacing film (64) applied directly to the composite laminate assembly (16) prior to the curing (34) of the composite laminate assembly (16), and the surfacing film (64) co-cured with the composite laminate assembly (16), the surfacing film (64) comprising a resin-based composite surfacing film (64a).
Clause 4. The modified modulus composite laminate system (10) of Clause 3, wherein the resin-based composite surfacing film (64a) comprises a prepreg thermoset resin (118) comprising one or more of, an adhesive (118a), an epoxy (118b), a phenolic (118c), a polyimide (118d), a bismaleimide (118e), a polyurethane (118f), a fluoropolymer (118g), and a cyanate ester (118h).
Clause 5.The modified modulus composite laminate system (10) of Clause 1 or Clause 2, wherein the surface layer (12) comprises a lightning strike protection material assembly (66) applied directly to the composite laminate assembly (16) prior to the curing (34) of the composite laminate assembly (16), and the lightning strike protection material assembly (66) co-cured with the composite laminate assembly (16), the lightning strike protection material assembly (66) comprising:
   a lightning strike expanded metal foil layer (122) comprising a lightning strike expanded metal foil (124); and
   a resin infused scrim layer (132) laminated to the lightning strike expanded metal foil layer (122), the resin infused scrim layer (132) comprising a non-metallic scrim (134) infused with an infused resin (136).
Clause 6. The modified modulus composite laminate system (10) of Clause 5, wherein the lightning strike expanded metal foil (124) comprises a non-continuous metal foil (126) comprising one or more of, a perforated metal foil (126a), an expanded metal foil (126b), a metal mesh (126c), a metallized fiber mesh (126d), a metal screen (126e), a metallized fiber weave (126f), a woven metal (126g), a wire mesh (126h), a metal foam (126i), and an open cell metal foam (126j).
Clause 7.The modified modulus composite laminate system (10) of Clause 5 or Clause 6, wherein the non-metallic scrim (134) comprises one of, a non-metallic scrim mat (134a), a glass fiber scrim mat (134b), a carbon fiber scrim mat (134c), a woven scrim mat (134d), a knit polyester scrim mat (134e), or a nonwoven scrim mat (134f).
Clause 8.The modified modulus composite laminate system (10) of Clause 1 or Clause 2, wherein the surface layer (12) comprises one or more resin repair layers (68) applied directly to the composite laminate assembly (16) after the curing (34) of the composite laminate assembly (16), the one or more resin repair layers (68) each comprising a resin system (146) with reinforced composite fibers (46a).
Clause 9. The modified modulus composite laminate system (10) of any preceding Clause, wherein the at least one secondary coating (70) comprises one or more of, a paint coating (72), a basecoat paint coating (72a), a topcoat paint coating (72b), a primer coating (74), an applique (76), a decal (78), or a repair paste coating (80).
Clause 10. The modified modulus composite laminate system (10) of any preceding Clause, wherein the surface layer (12) comprises a surface layer shock absorber (13) that absorbs different stresses (30) and different strains (32) of the at least one secondary coating (70) and each of the plurality of structural ply layers (22) of the composite laminate assembly (16), when the modified modulus composite laminate system (10) is subjected to one or more of, the thermal exposure (96), and the moisture exposure (98), resulting in an improved thermal moisture cycling performance (110) of the modified modulus composite laminate system (10).
Clause 11. An aircraft (200a) having one or more aircraft composite structures (94a) with a modified modulus composite laminate system (10), the aircraft (200a) comprising:
   the one or more aircraft composite structures (94a) comprising one or more of:
      a fuselage (202);
      one or more wings (204); and
      a tail (208) comprising one or more vertical stabilizers (210), and horizontal stabilizers (212); and
   the modified modulus composite laminate system (10) incorporated in the one or more aircraft composite structures (94a), the modified modulus composite laminate system (10) comprising:
      a composite laminate assembly (16) that is cured and comprised of a plurality of structural ply layers (22) preimpregnated with a structural resin (60), each structural ply layer (22) having a ply modulus (25a), a ply coefficient of thermal expansion (26a), and a ply coefficient of moisture expansion (28a) that are the same in each structural ply layer (22);
      a surface layer (12) applied directly to the composite laminate assembly (16), either applied prior to curing (34) the composite laminate assembly (16), or applied after the curing (34) of the composite laminate assembly (16), the surface layer (12) applied prior to the curing, or applied after the curing, having, a modified modulus (25c) that is less than, or equal to, the ply modulus (25a), a surface layer coefficient of thermal expansion (26b) that is different from the ply coefficient of thermal expansion (26a), and a surface layer coefficient of moisture expansion (28b) that is different from the ply coefficient of moisture expansion (28a); and
      at least one secondary coating (70) applied directly to the surface layer (12), after the curing (34) of the composite laminate assembly (16), the at least one secondary coating (70) having, a secondary coating modulus (25d) that is different from the ply modulus (25a), a secondary coating coefficient of thermal expansion (26c) that is different from the ply coefficient of thermal expansion (26a), and a secondary coating coefficient of moisture expansion (28c) that is different from the ply coefficient of moisture expansion (28a),
   wherein the modified modulus (25c) of the surface layer (12) is modified to greater than, or equal to, the secondary coating modulus (25d) of the at least one secondary coating (70), prior to application of the at least one secondary coating (70) to the surface layer (12), and
   further wherein the surface layer (12) with the modified modulus (25c) creates a stress relief (31) and an integrated dampening (102) between the at least one secondary coating (70) and the plurality of structural ply layers (22) of the composite laminate assembly (16), to provide an increased microcracking resistance (106) and a minimized structural degradation (108) for the one or more aircraft composite structures (94a) with the modified modulus composite laminate system (10), when the one or more aircraft composite structures (94a) with the modified modulus composite laminate system (10) are subjected to one or more of, a thermal exposure (96), and a moisture exposure (98), in a thermal moisture cycling (100).
Clause 12. The aircraft (200a) of Clause 11, wherein the surface layer (12) comprises a surfacing film (64) applied directly to the composite laminate assembly (16) prior to the curing (34) of the composite laminate assembly (16), and co-cured with the composite laminate assembly (16), the surfacing film (64) comprising a resin-based composite surfacing film (64a).
Clause 13. The aircraft (200a) of Clause 11, wherein the surface layer (12) comprises a lightning strike protection material assembly (66) applied directly to the composite laminate assembly (16) prior to the curing (34) of the composite laminate assembly (16), and co-cured with the composite laminate assembly (16), the lightning strike protection material assembly (66) comprising:
   a lightning strike expanded metal foil layer (122) comprising a lightning strike expanded metal foil (124); and
   a resin infused scrim layer (132) laminated to the lightning strike expanded metal foil layer (122), the resin infused scrim layer (132) comprising a non-metallic scrim (134) with an infused resin (136).
Clause 14. The aircraft (200a) of Clause 11, wherein the surface layer (12) comprises one or more resin repair layers (68) applied directly to the composite laminate assembly (16) after the curing (34) of the composite laminate assembly (16), the resin repair layer (68) each comprising a resin system (146) with reinforced composite fibers (46a).
Clause 15. The aircraft (200a) of any of Clauses 11 - 14, wherein the at least one secondary coating (70) comprises one or more of, a paint coating (72), a basecoat paint coating (72a), a topcoat paint coating (72b), a primer coating (74), an applique (76), a decal (78), or a repair paste coating (80).
Clause 16. A method (190) of using a modified modulus composite laminate system (10) to provide an increased microcracking resistance (106) and a minimized structural degradation (108) for a composite structure (94), the method (190) comprising the steps of:
   (192) providing the modified modulus composite laminate system (10) comprising:
   a composite laminate assembly (16) that is cured and comprised of a plurality of structural ply layers (22) preimpregnated with a structural resin (60), each structural ply layer (22) having a ply modulus (25a), a ply coefficient of thermal expansion (26a), and a ply coefficient of moisture expansion (28a) that are the same in each structural ply layer (22);
   a surface layer (12) applied directly to the composite laminate assembly (16), either applied prior to curing (34) the composite laminate assembly (16), or applied after the curing (34) of the composite laminate assembly (16), the surface layer (12) applied prior to the curing, or applied after the curing, having, a modified modulus (25c) that is less than, or equal to, the ply modulus (25a), a surface layer coefficient of thermal expansion (26b) that is different from the ply coefficient of thermal expansion (26a), and a surface layer coefficient of moisture expansion (28a) that is different from the ply coefficient of moisture expansion (28a); and
   at least one secondary coating (70) applied directly to the surface layer (12), after the curing (34) of the composite laminate assembly (16), the at least one secondary coating (70) having, a secondary coating modulus (25d) that is different from the ply modulus (25a), a secondary coating coefficient of thermal expansion (26c) that is different from the ply coefficient of thermal expansion (26a), and a secondary coating coefficient of moisture expansion (28c) that is different from the ply coefficient of moisture expansion (28a), wherein the modified modulus (25c) of the surface layer (12) is modified to be greater than, or equal to, the secondary coating modulus (25d) of the at least one secondary coating (70), prior to application of the at least one secondary coating (70) to the surface layer (12);
   (194) incorporating the modified modulus composite laminate system (10) in the composite structure (94); and
   (196) using the modified modulus composite laminate system (10) having the surface layer (12) with the modified modulus (25c), to create a stress relief (31) and an integrated dampening (102) between the at least one secondary coating (70) and the plurality of structural ply layers (22) of the composite laminate assembly (16), to provide the increased microcracking resistance (106) and the minimized structural degradation (108) for the composite structure (94) with the modified modulus composite laminate system (10), when the composite structure (94) with the modified modulus composite laminate system (10) is subjected to one or more of, a thermal exposure (96), and a moisture exposure (98), in a thermal moisture cycling (100).
Clause 17. The method (190) of Clause 16, wherein the step (192) of providing the modified modulus composite laminate system (10) further comprises, providing the modified modulus composite laminate system (10), wherein the surface layer (12) comprises one of:
   a surfacing film (64) applied directly to the composite laminate assembly (16), prior to the curing (34) of the composite laminate assembly (16), and co-cured with the composite laminate assembly (16), the surfacing film (64) comprising a resin-based composite surfacing film (64a);
   one or more resin repair layers (68) applied directly to the composite laminate assembly (16), after the curing (34) of the composite laminate assembly (16), the resin repair layer (68) each comprising a resin system (146) with reinforced composite fibers (46a); or
   a lightning strike protection material assembly (66) applied directly to the composite laminate assembly (16), prior to the curing (34) of the composite laminate assembly (16), and co-cured with the composite laminate assembly (16), the lightning strike protection material assembly (66) comprising:
      a lightning strike expanded metal foil layer (122) comprising a lightning strike expanded metal foil (124); and
      a resin infused scrim layer (132) laminated to the lightning strike expanded metal foil layer (122), the resin infused scrim layer (132) comprising a non-metallic scrim (134) with an infused resin (136).
Clause 18. The method (190) of Clause 16 or Clause 17, wherein the step (192) of providing the modified modulus composite laminate system (10) further comprises, providing the modified modulus composite laminate system (10), wherein the at least one secondary coating (70) comprises one or more of, a paint coating (72), a basecoat paint coating (72a), a topcoat paint coating (72b), a primer coating (74), an applique (76), a decal (78), or a repair paste coating (80).
Clause 19. The method (190) of any of Clauses 16 - 18, wherein the step (192) of providing the modified modulus composite laminate system (10) further comprises, providing the modified modulus composite laminate system (10), wherein the surface layer (12) is applied directly to the composite laminate assembly (16), prior to the curing (34) of the composite laminate assembly (16), and the surface layer (12) and the composite laminate assembly (16) are co-cured (34a) in an autoclave (90) with heat (36), to obtain a modified modulus composite laminate assembly (11) that is cured, prior to application of the at least one secondary coating (70).
Clause 20. The method (190) of any of Clauses 16 - 19, wherein the step (194) of incorporating the modified modulus composite laminate system (10) in the composite structure (94), further comprises, incorporating the modified modulus composite laminate system (10) in the composite structure (94) comprising one of,
   a fuselage (202) of an aircraft (200a);
   a wing (204) of the aircraft (200a); or
   a horizontal stabilizer (212) of the aircraft (200a).
Clause A1. A modified modulus composite laminate system (10) comprising:
   a composite laminate assembly (16) that is cured and comprised of a plurality of structural ply layers (22) preimpregnated with a structural resin (60), each structural ply layer (22) having a ply modulus (25a), a ply coefficient of thermal expansion (26a), and a ply coefficient of moisture expansion (28a) that are the same in each structural ply layer (22);
   a surface layer (12) applied directly to the composite laminate assembly (16), the surface layer (12) having a modified modulus (25c) that is less than, or equal to, the ply modulus (25a), a surface layer coefficient of thermal expansion (26b) that is different from the ply coefficient of thermal expansion (26a), and a surface layer coefficient of moisture expansion (28b) that is different from the ply coefficient of moisture expansion (28a); and
   at least one secondary coating (70) applied directly to the surface layer (12), the at least one secondary coating (70) having a secondary coating modulus (25d) that is different from the ply modulus (25a), a secondary coating coefficient of thermal expansion (26c) that is different from the ply coefficient of thermal expansion (26a), and a secondary coating coefficient of moisture expansion (28c) that is different from the ply coefficient of moisture expansion (28a),
   wherein the modified modulus (25c) of the surface layer (12) is greater than, or equal to, the secondary coating modulus (25d) of the at least one secondary coating (70).
Clause A1a. The modified modulus composite laminate system (10) of Clause A1, wherein the surface layer (12) is applied directly to the composite laminate assembly (16), either prior to curing (34) the composite laminate assembly (16) or after the curing (34) of the composite laminate assembly (16);
   wherein the at least one secondary coating (70) is applied directly to the surface layer (12) after the curing (34) of the composite laminate assembly (16);
   wherein the modified modulus (25c) of the surface layer (12) is modified to be greater than, or equal to, the secondary coating modulus (25d) of the at least one secondary coating (70) prior to application of the at least one secondary coating (70) to the surface layer (12); and
   further wherein the surface layer (12) with the modified modulus (25c) creates a stress relief (31) and an integrated dampening (102) between the at least one secondary coating (70) and the plurality of structural ply layers (22) of the composite laminate assembly (16), to provide an increased microcracking resistance (106) and a minimized structural degradation (108) of the modified modulus composite laminate system (10), when the modified modulus composite laminate system (10) is subjected to one or more of, a thermal exposure (96), and a moisture exposure (98), in a thermal moisture cycling (100).
Clause A2.The modified modulus composite laminate system (10) of Clause A1 or Clause A1a, wherein the plurality of structural ply layers (22) each comprises a composite material (42) comprising one of, one or more carbon-fiber reinforced polymers (48), one or more glass-fiber reinforced polymers (52), or one or more aramid polymers (56).
Clause A3.The modified modulus composite laminate system (10) of any of Clauses A1 - A2, wherein the surface layer (12) comprises a surfacing film (64) applied directly to the composite laminate assembly (16), and wherein the surfacing film (64) is co-cured with the composite laminate assembly (16), the surfacing film (64) comprising a resin-based composite surfacing film (64a).
Clause A3a. The modified modulus composite laminate system (10) of Clause A3, the surfacing film (64) is applied directly to the composite laminate assembly (16) prior to the curing (34) of the composite laminate assembly (16).
Clause A4. The modified modulus composite laminate system (10) of Clause A3 or Clause A3a, wherein the resin-based composite surfacing film (64a) comprises a prepreg thermoset resin (118) comprising one or more of, an adhesive (118a), an epoxy (118b), a phenolic (118c), a polyimide (118d), a bismaleimide (118e), a polyurethane (118f), a fluoropolymer (118g), and a cyanate ester (118h).
Clause A5.The modified modulus composite laminate system (10) of Clause A1, Clause A1a or Clause A2, wherein the surface layer (12) comprises a lightning strike protection material assembly (66) applied directly to the composite laminate assembly (16), and wherein the lightning strike protection material assembly (66) is co-cured with the composite laminate assembly (16), the lightning strike protection material assembly (66) comprising:
   a lightning strike expanded metal foil layer (122) comprising a lightning strike expanded metal foil (124); and
   a resin infused scrim layer (132) laminated to the lightning strike expanded metal foil layer (122), the resin infused scrim layer (132) comprising a non-metallic scrim (134) infused with an infused resin (136).
Clause A5a. The modified modulus composite laminate system (10) of Clause A5, wherein the lightning strike protection material assembly (66) is applied directly to the composite laminate assembly (16) prior to the curing (34) of the composite laminate assembly (16).
Clause A6. The modified modulus composite laminate system (10) of Clause A5 or Clause A5a, wherein the lightning strike expanded metal foil (124) comprises a non-continuous metal foil (126) comprising one or more of, a perforated metal foil (126a), an expanded metal foil (126b), a metal mesh (126c), a metallized fiber mesh (126d), a metal screen (126e), a metallized fiber weave (126f), a woven metal (126g), a wire mesh (126h), a metal foam (126i), and an open cell metal foam (126j).
Clause A7.The modified modulus composite laminate system (10) of Clause A5, Clause A5a or Clause A6, wherein the non-metallic scrim (134) comprises one of, a non-metallic scrim mat (134a), a glass fiber scrim mat (134b), a carbon fiber scrim mat (134c), a woven scrim mat (134d), a knit polyester scrim mat (134e), or a nonwoven scrim mat (134f).
Clause A8.The modified modulus composite laminate system (10) of Clause A1, Clause A1a or Clause A2, wherein the surface layer (12) comprises one or more resin repair layers (68) applied directly to the composite laminate assembly (16), the one or more resin repair layers (68) each comprising a resin system (146) with reinforced composite fibers (46a).
Clause A8a. The modified modulus composite laminate system (10) of Clause A8, wherein the one or more resin repair layers (68) are applied directly to the composite laminate assembly (16) after the curing (34) of the composite laminate assembly (16).
Clause A9. The modified modulus composite laminate system (10) of any of Clauses A1 - A8a, wherein the at least one secondary coating (70) comprises one or more of, a paint coating (72), a basecoat paint coating (72a), a topcoat paint coating (72b), a primer coating (74), an applique (76), a decal (78), or a repair paste coating (80).
Clause A10. The modified modulus composite laminate system (10) of any of Clauses A1 - A9, wherein the surface layer (12) comprises a surface layer shock absorber (13) that is configured to absorb different stresses (30) and different strains (32) of the at least one secondary coating (70) and each of the plurality of structural ply layers (22) of the composite laminate assembly (16), when the modified modulus composite laminate system (10) is subjected to one or more of, a thermal exposure (96), and a moisture exposure (98).
Clause A10a. The modified modulus composite laminate system (10) of Clause A10, resulting in an improved thermal moisture cycling performance (110) of the modified modulus composite laminate system (10).
Clause A11. An aircraft (200a) having one or more aircraft composite structures (94a) with a modified modulus composite laminate system (10), the aircraft (200a) comprising:
   one or more aircraft composite structures (94a) comprising one or more of:
   a fuselage (202);
   one or more wings (204); and
   a tail (208) comprising one or more vertical stabilizers (210), and horizontal stabilizers (212); and
   the modified modulus composite laminate system (10) of any of Clauses A1 - A10a, the modified modulus composite laminate system (10) incorporated in the one or more aircraft composite structures (94a).
Clause A12. A method of forming the modified modulus composite laminate system (10) of any of Clauses A1 - 10a, the method comprising:
   curing (34) the composite laminate assembly (16), wherein the composite laminate assembly (16) is comprised of the plurality of structural ply layers (22) preimpregnated with the structural resin (60), wherein each structural ply layer (22) has the ply modulus (25a), the ply coefficient of thermal expansion (26a), and the ply coefficient of moisture expansion (28a) that are the same in each structural ply layer (22);
   applying the surface layer (12) directly to the cured composite laminate assembly (16), either applying prior to the curing (34) of the composite laminate assembly (16), or applying after the curing (34) of the composite laminate assembly (16), wherein the surface layer (12) has the modified modulus (25c) that is less than, or equal to, the ply modulus (25a), the surface layer coefficient of thermal expansion (26b) that is different from the ply coefficient of thermal expansion (26a), and the surface layer coefficient of moisture expansion (28a) that is different from the ply coefficient of moisture expansion (28a); and
   applying the at least one secondary coating (70) directly to the surface layer (12), after the curing (34) of the composite laminate assembly (16), wherein the at least one secondary coating (70) has the secondary coating modulus (25d) that is different from the ply modulus (25a), the secondary coating coefficient of thermal expansion (26c) that is different from the ply coefficient of thermal expansion (26a), and the secondary coating coefficient of moisture expansion (28c) that is different from the ply coefficient of moisture expansion (28a), thereby forming the modified modulus composite laminate system (10),
   wherein, prior to the applying the at least one secondary coating (70) to the surface layer (12), the method further comprises modifying the modified modulus (25c) of the surface layer (12) to be greater than, or equal to, the secondary coating modulus (25d) of the at least one secondary coating (70).
Clause A12a. The method of forming the modified modulus composite laminate system (10) of Clause A12 to provide an increased microcracking resistance (106) and a minimized structural degradation (108) for a composite structure (94); and
   wherein the method further comprises:
   incorporating (194) the modified modulus composite laminate system (10) in the composite structure (94); and
   using (196) the modified modulus composite laminate system (10) having the surface layer (12) with the modified modulus (25c), to create a stress relief (31) and an integrated dampening (102) between the at least one secondary coating (70) and the plurality of structural ply layers (22) of the composite laminate assembly (16), to provide the increased microcracking resistance (106) and the minimized structural degradation (108) for the composite structure (94) with the modified modulus composite laminate system (10), when the composite structure (94) with the modified modulus composite laminate system (10) is subjected to one or more of, a thermal exposure (96), and a moisture exposure (98), in a thermal moisture cycling (100).
Clause A13.The method of Clause A12 or Clause A12a, wherein the applying the surface layer (12) comprises applying a surfacing film (64) directly to the composite laminate assembly (16) prior to the curing (34) of the composite laminate assembly (16), and wherein the method comprises co-curing the surfacing film (64) with the composite laminate assembly (16), the surfacing film (64) comprising a resin-based composite surfacing film (64a).
Clause A14.The method of Clause A12 or Clause A12a, wherein the applying the surface layer (12) comprises applying a lightning strike protection material assembly (66) directly to the composite laminate assembly (16) prior to the curing (34) of the composite laminate assembly (16), and wherein the method comprises co-curing the lightning strike protection material assembly (66) with the composite laminate assembly (16), the lightning strike protection material assembly (66) comprising:
   a lightning strike expanded metal foil layer (122) comprising a lightning strike expanded metal foil (124); and
   a resin infused scrim layer (132) laminated to the lightning strike expanded metal foil layer (122), the resin infused scrim layer (132) comprising a non-metallic scrim (134) infused with an infused resin (136).
Clause A15. The method of Clause A12 or Clause A12a, wherein the applying the surface layer (12) comprises applying one or more resin repair layers (68) directly to the composite laminate assembly (16) after the curing (34) of the composite laminate assembly (16), the one or more resin repair layers (68) each comprising a resin system (146) with reinforced composite fibers (46a).

## Claims

1. A modified modulus composite laminate system (10) comprising:
a composite laminate assembly (16) that is cured and comprised of a plurality of structural ply layers (22) with a cured structural resin (60c), each structural ply layer (22) having a ply modulus (25a), a ply coefficient of thermal expansion (26a), and a ply coefficient of moisture expansion (28a) that are the same in each structural ply layer (22);
a surface layer (12) applied directly to the composite laminate assembly (16), the surface layer (12) having a modified modulus (25c) that is less than, or equal to, the ply modulus (25a), a surface layer coefficient of thermal expansion (26b) that is different from the ply coefficient of thermal expansion (26a), and a surface layer coefficient of moisture expansion (28b) that is different from the ply coefficient of moisture expansion (28a); and
at least one secondary coating (70) applied directly to the surface layer (12), the at least one secondary coating (70) having a secondary coating modulus (25d) that is different from the ply modulus (25a), a secondary coating coefficient of thermal expansion (26c) that is different from the ply coefficient of thermal expansion (26a), and a secondary coating coefficient of moisture expansion (28c) that is different from the ply coefficient of moisture expansion (28a),
wherein the modified modulus (25c) of the surface layer (12) is greater than, or equal to, the secondary coating modulus (25d) of the at least one secondary coating (70).

2. The modified modulus composite laminate system (10) of claim 1, wherein the plurality of structural ply layers (22) each comprises a composite material (42) comprising one of, one or more carbon-fiber reinforced polymers (48), one or more glass-fiber reinforced polymers (52), or one or more aramid polymers (56).

3. The modified modulus composite laminate system (10) of any preceding claim, wherein the surface layer (12) comprises a surfacing film (64) applied directly to the composite laminate assembly (16), and wherein the surfacing film (64) is co-cured with the composite laminate assembly (16), the surfacing film (64) comprising a resin-based composite surfacing film (64a).

4. The modified modulus composite laminate system (10) of claim 3, wherein the resin-based composite surfacing film (64a) comprises a prepreg thermoset resin (118) comprising one or more of, an adhesive (118a), an epoxy (118b), a phenolic (118c), a polyimide (118d), a bismaleimide (118e), a polyurethane (118f), a fluoropolymer (118g), and a cyanate ester (118h).

5. The modified modulus composite laminate system (10) of claim 1 or claim 2, wherein the surface layer (12) comprises a lightning strike protection material assembly (66) applied directly to the composite laminate assembly (16), and wherein the lightning strike protection material assembly (66) is co-cured with the composite laminate assembly (16), the lightning strike protection material assembly (66) comprising:
a lightning strike expanded metal foil layer (122) comprising a lightning strike expanded metal foil (124); and
a resin infused scrim layer (132) laminated to the lightning strike expanded metal foil layer (122), the resin infused scrim layer (132) comprising a non-metallic scrim (134) infused with a cured infused resin (136c).

6. The modified modulus composite laminate system (10) of claim 5, wherein the lightning strike expanded metal foil (124) comprises a non-continuous metal foil (126) comprising one or more of, a perforated metal foil (126a), an expanded metal foil (126b), a metal mesh (126c), a metallized fiber mesh (126d), a metal screen (126e), a metallized fiber weave (126f), a woven metal (126g), a wire mesh (126h), a metal foam (126i), and an open cell metal foam (126j).

7. The modified modulus composite laminate system (10) of claim 5 or claim 6, wherein the non-metallic scrim (134) comprises one of, a non-metallic scrim mat (134a), a glass fiber scrim mat (134b), a carbon fiber scrim mat (134c), a woven scrim mat (134d), a knit polyester scrim mat (134e), or a nonwoven scrim mat (134f).

8. The modified modulus composite laminate system (10) of claim 1 or claim 2, wherein the surface layer (12) comprises one or more resin repair layers (68) applied directly to the composite laminate assembly (16), the one or more resin repair layers (68) each comprising a resin system (146) with reinforced composite fibers (46a).

9. The modified modulus composite laminate system (10) of any preceding claim, wherein the at least one secondary coating (70) comprises one or more of, a paint coating (72), a basecoat paint coating (72a), a topcoat paint coating (72b), a primer coating (74), an applique (76), a decal (78), or a repair paste coating (80).

10. The modified modulus composite laminate system (10) of any preceding claim, wherein the surface layer (12) comprises a surface layer shock absorber (13) that is configured to absorb different stresses (30) and different strains (32) of the at least one secondary coating (70) and each of the plurality of structural ply layers (22) of the composite laminate assembly (16), when the modified modulus composite laminate system (10) is subjected to one or more of, a thermal exposure (96), and a moisture exposure (98).

11. An aircraft (200a) having one or more aircraft composite structures (94a) with a modified modulus composite laminate system (10), the aircraft (200a) comprising:
one or more aircraft composite structures (94a) comprising one or more of:
a fuselage (202);
one or more wings (204); and
a tail (208) comprising one or more vertical stabilizers (210), and horizontal stabilizers (212); and
the modified modulus composite laminate system (10) of any preceding claim, the modified modulus composite laminate system (10) incorporated in the one or more aircraft composite structures (94a).

12. A method of forming the modified modulus composite laminate system (10) of any of claims 1 - 10, the method comprising:
curing (34) a composite laminate assembly (16a), wherein the composite laminate assembly (16) is comprised of a plurality of structural ply layers (22) preimpregnated with a structural resin (60), wherein each structural ply layer (22) has a ply modulus (25a), a ply coefficient of thermal expansion (26a), and a ply coefficient of moisture expansion (28a) that are the same in each structural ply layer (22);
applying a surface layer (12) directly to the composite laminate assembly (16), either applying prior to the curing (34) of the composite laminate assembly (16), or applying after the curing (34) of the composite laminate assembly (16), wherein the surface layer (12) has a modified modulus (25c) that is less than, or equal to, the ply modulus (25a), a surface layer coefficient of thermal expansion (26b) that is different from the ply coefficient of thermal expansion (26a), and a surface layer coefficient of moisture expansion (28a) that is different from the ply coefficient of moisture expansion (28a); and
applying at least one secondary coating (70) directly to the surface layer (12), after the curing (34) of the composite laminate assembly (16), wherein the at least one secondary coating (70) has a secondary coating modulus (25d) that is different from the ply modulus (25a), a secondary coating coefficient of thermal expansion (26c) that is different from the ply coefficient of thermal expansion (26a), and a secondary coating coefficient of moisture expansion (28c) that is different from the ply coefficient of moisture expansion (28a), thereby forming the modified modulus composite laminate system (10),
wherein, prior to the applying the at least one secondary coating (70) to the surface layer (12), the modified modulus (25c) of the surface layer (12) is modified to be greater than, or equal to, the secondary coating modulus (25d) of the at least one secondary coating (70).

13. The method of claim 12, wherein the applying the surface layer (12) comprises applying a surfacing film (64) directly to the composite laminate assembly (16) prior to the curing (34) of the composite laminate assembly (16), and wherein the method comprises co-curing the surfacing film (64) with the composite laminate assembly (16), the surfacing film (64) comprising a resin-based composite surfacing film (64a).

14. The method of claim 12, wherein the applying the surface layer (12) comprises applying a lightning strike protection material assembly (66) directly to the composite laminate assembly (16) prior to the curing (34) of the composite laminate assembly (16), and wherein the method comprises co-curing the lightning strike protection material assembly (66) with the composite laminate assembly (16), the lightning strike protection material assembly (66) comprising:
a lightning strike expanded metal foil layer (122) comprising a lightning strike expanded metal foil (124); and
a resin infused scrim layer (132) laminated to the lightning strike expanded metal foil layer (122), the resin infused scrim layer (132) comprising a non-metallic scrim (134) infused with an infused resin (136).

15. The method of claim 12, wherein the applying the surface layer (12) comprises applying one or more resin repair layers (68) directly to the composite laminate assembly (16) after the curing (34) of the composite laminate assembly (16), the one or more resin repair layers (68) each comprising a resin system (146) with reinforced composite fibers (46a).
